# Europäisches Patentamt

# European Patent Office

# Office européen des brevets

(19)

(11) Veröffentlichungsnummer : **0 465 932 B1**

(12)

# EUROPÄISCHE PATENTSCHRIFT

(45) Veröffentlichungstag der Patentschrift :
21.09.94 Patentblatt 94/38

(51) Int. Cl.$^5$ : **G01V 9/00**

(21) Anmeldenummer : **91110605.2**

(22) Anmeldetag : **26.06.91**

(54) **Verfahren zum Nachweis des Erdgaspotentials in Sedimentbecken und daraus abgeleitet des Erdölpotentials.**

(30) Priorität : **05.07.90 DE 4021465**

(43) Veröffentlichungstag der Anmeldung :
**15.01.92 Patentblatt 92/03**

(45) Bekanntmachung des Hinweises auf die
Patenterteilung :
**21.09.94 Patentblatt 94/38**

(84) Benannte Vertragsstaaten :
**AT BE CH DE DK ES FR GB GR IT LI NL SE**

(56) Entgegenhaltungen :
**GB-A- 2 137 339
WORLD OIL, Bd. 207, Nr. 5, 1. November 1988,
Houston, Texas, US, W.DUCHSCHERER:
"Integrating geochemical techniques found
useful"**

(56) Entgegenhaltungen :
**ERDÖL UND KOHLE - ERDGAS - PETROCHE-
MIE, Bd. 35, Nr. 12, 1. Dezember 1982, DE, D.
Kettel: "Norddeutsche Erdgase"
CHEMICAL GEOLOGY, Bd. 16, 1975, Amsterdam, NL, W.J.Stahl et al.: "Source-rock identification by isotope analyses of natural gases
from fields in the Val Verde and Delaware
Basins, West Texas"**

(73) Patentinhaber : **Kettel, Dirk, Dr.
Postfach 32 24
D-30032 Hannover (DE)**

(72) Erfinder : **Kettel, Dirk, Dr.
Postfach 32 24
D-30032 Hannover (DE)**

(74) Vertreter : **König, Norbert, Dipl.-Phys. Dr. et al
Patentanwälte
Leine & König
Burckhardtstrasse 1
D-30163 Hannover (DE)**

**Beschreibung**

Die Erfindung betrifft ein Verfahren zum Nachweis des Erdgaspotentials in Sedimentbecken und seiner lateralen Veränderung und daraus abgeleitet des Erdölpotentials.

**1. Einleitung**

Oberflächengeochemische Untersuchungen werden in der Exploration auf Öl und Gas angewandt mit dem Ziel, produktive Muttergesteine und/oder die Kohlenwasserstofffüllung seismisch identifizierter Strukturen durch die Beprobung oberflächennaher Schichten sowie die Analyse ihres Kohlenwasserstoffgehaltes nachzuweisen.

In der vorliegenden Methode wird folgendes Probenahmeverfahren und folgender analytischer Ansatz gewählt: Es werden Spuren von Methan bis Hexan, die an der Tonfraktion < 63 μm eines Oberflächensedimentes adsorbiert sind, gemessen, um Methan aus bakterieller Fermentation zu vermeiden. Es werden die geochemischen Gasparameter Ausbeuten $C_1$ bis $C_6$ in Gewichts-ppb pro Einwaage der Feinfraktion der Probe und die stabilen Isotopenverhältnisse δ13C1 und δDC1 am Methan gemessen. Theoretisch (STAHL + CAREY 1975, SCHOELL 1984, KETTEL 1989, CLAYTON 1991) soll die isotopische Zusammensetzung eines Gases den Reifezustand und die organische Fazies des zugehörigen Muttergesteins anzeigen, während man hoffte, die Gasausbeuten würden das Gaspotential im Untergrund wiedergeben. Faber und Stahl (z. B. STAHL et al. 1984, FABER + STAHL 1984, s. Literaturhinweise), haben geochemische Untersuchungen durchgeführt und dabei Gasausbeuten und deren isotopische Zusammensetzung δ13C1 und δDC1 gemessen, kartiert und mit Untergrundstrukturen verglichen. Dabei hat sich gezeigt, daß die gemessenen Rohdaten die Gaspotentiale sowie die Reife und die organische Fazies der Muttergesteine im allgemeinen nicht anzeigen. Das hat folgende Gründe:

FUEX 1980 konnte zeigen, daß Methan auf dem Migrationsweg vom Muttergestein in eine Lagerstätte nicht wesentlich isotopisch fraktioniert, da sich große Methankonzentrationen ansammeln. Daher können Korrelationen der isotopischen Zusammensetzung von Lagerstättenmethan mit der Reife und der organischen Fazies des zugehörigen Muttergesteins als möglich angesehen werden. Das gilt jedoch nicht für Gase, die von einem Muttergestein oder einer Lagerstätte an die Oberfläche migrieren: Aufgrund des hohen Verdünnungsgrades erleiden sie erhebliche isotopische Fraktionierung. Das heobachtet man nicht nur für die freie Gasphase (FUEX 1980), sondern auch für die im vorliegenden Verfahren gemessene adsorbierte Gasphase.

Dies ist entscheidend für die Erfindung, die anhand der beigefügten Zeichnungen näher erläutert werden soll. Es zeigt

Abb. 1 Beispiel für ein vorstationäres Gasprofil im Sediment bei Transport durch Wasser

Abb. 2 Fraktionierung der stabilen Kohlenstoffisotope des Methan beim Übergang gelöste Phase -> adsorbierte Phase

Abb. 3 Fraktionierung der Wasserstoffisotope des Methan beim Übergang gelöste Phase -> adsorbierte Phase

Abb. 4 Differentialdiagnose des gemessenen Isotopenpaares δ13C1/δDC1

Abb. 5 Beziehung des δ13C1 von Lagerstättenmethan zu Reife und Fazies des gasabspaltenden Muttergesteins

Abb. 6 Beziehung des δDC1 von Lagerstättenmethan zu Reife und Fazies des gasabspaltenden Muttergesteins

Abb. 7 Modell der differentiellen Gasphase für Kohlen

Abb. 8 Prinzipielle Veränderungen der Gasparameter in stetig abnehmenden Sedimentbecken

Abb. 9 Prinzipielle Veränderungen der Gasparameter in jung gehobenen Sedimentbecken

Abb. 10 Gemessene Isotopenverhältnisse in Relation zur adsorbierten Methangasausbeute bei gleicher Probenlithologie und über gleicher Methanquelle

Abb. 11 Isotopenshift als Funktion von Faktor A und der Methangasausbeute.

An Meßserien von Isotopenverhältnissen freier und adsorbierter Gase in Tief- und Flachbohrungen (LOMMERZHEIM 1988, STAHL et al. 1984) wurde beobachtet, daß an derselben Lokation - d. h. für dasselbe Gaspotential aus dem Untergrund und dieselben Muttergesteinseigenschaften - die Isotopenverhältnisse von Methan und höheren Kohlenwasserstoffen mit der Lithologie des beprobten Sedimentes variieren. Es ist Bestandteil des hier vorgestellten Verfahrens, daß der weitaus bedeutendste lithologische Parameter, der die isotopische Fraktionierung der Gase steuert, die Permeabilität des beprobten Sedimentes ist. Permeabilität bedeutet aber Fluß von Flüssigkeit durch poröse Medien. Deshalb gibt dieser Nachweis Einblick in die Mechanismen, die der Gasmigration durch poröse Medien, sowie der Fraktionierung von Gasen auf ihrem Weg vom Muttergestein oder der Lagerstätte an die Oberfläche zugrundeliegen.

## 2. Mechanismen der Migration von Gasen durch Sediment

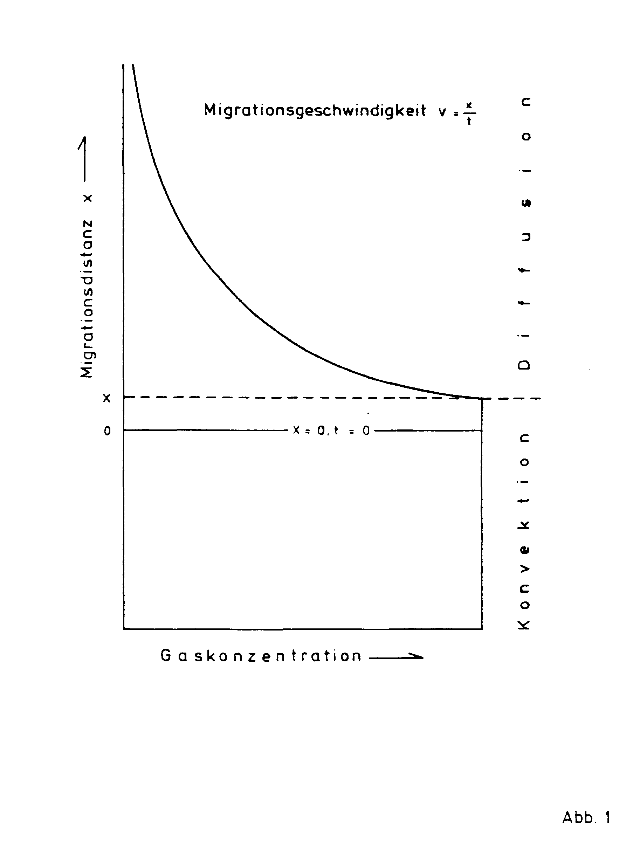

Sedimente können poröse und dichte Medien sein. In porösen und permeablen Medien sind in situ vorstationäre Profile der Gaskonzentration gemessen worden (Abb. 1). Aus der Form dieser Profile ergibt sich, daß eine mobile Phase (Wasser) eine gelöste Phase (Gas) transportiert, wobei die gelöste Phase etwas hinter der transportierten Phase zurückbleibt, was auf Adsorptions-/Desorptionsprozessen an der Oberfläche einer festen Phase (Ton) beruht. Mit anderen Worten: der physikalische Prozeß der Gasmigration durch poröse Medien ist Konvektion von Wasser, überlagert von Diffusion der gelösten Phase in Wasser.

Daher kann jede isotopische Fraktionierung von Gas während dieses Prozesses beschrieben werden durch Massenbilanzen zwischen dem schwereren und dem leichten Isotop, die Definition der $\delta$-Werte und geeignete Fraktionierungsfaktoren $\alpha$ nach Erreichung des Gleichgewichts für den Übergang gelöstes Gas - adsorbiertes Gas. Das wird in Kapitel 3 ausgeführt.

Die Geschwindigkeit des konvektiven Wasserflusses kann in geeigneter Weise beschrieben werden durch das DARCY'sche Gesetz. Das aber nur, wenn die Permeabilitäten der durchwanderten Sedimente größer sind als $10^{-3}$ darcy; denn die Erfahrung mit dem vorliegenden Verfahren hat gezeigt, daß bei Permeabilitäten kleiner als $10^{-3}$ darcy die Beziehung zwischen Geschwindigkeit, Druckgradient und Permeabilität nicht mehr linear ist. Dasselbe hat GABENER 1983 für unterschiedliche Bereiche des Druckgradienten i nachgewiesen. Kapitel 4 zeigt die Verfahrensweise, in der für die vorliegende Methode die Nicht-Linearität von DARCY's Gesetz behandelt wird. Die Hauptursache für diese Nicht-Linearität sind Interaktionen zwischen der Flüssigphase und dem Ton (Knudsen-Fluß).

Gasmigration durch dichte Medien (Salz, Anhydrit) kann hinreichend beschrieben werden durch Diffusion von Gas durch Gesteinsmatrix oder Flüssigkeitseinschlüsse, manchmal an der Grenze zur Konvektion (Risse, Klüfte), und damit gelten die FICK'schen Gesetze. Die Migrationsgeschwindigkeiten, die sich daraus ergeben, hängen von der Heterogenität des durchwanderten Mediums sowie von den Diffusionskonstanten unterschiedlicher Gas/Matrix-Systeme ab (KROOSS + LEYTHÄUSER 1988, MOISIO THOMAS 1989, SAHORES + WITHERSPOON 1970). Sie sind mindestens um den Faktor $10^4$ kleiner als Migrationsgeschwindigkeiten aufgrund von Konvektion.

Diffusion ist für das vorliegende Verfahren dann von Bedeutung, wenn dichte Schichten einen schnellen Gastransport oder eine schnelle Informationsübertragung von einem Muttergestein oder einer Lagerstätte an die Oberfläche verhindern. In einem solchen Fall kommt innerhalb derselben Migrationszeit nur ein kleiner Bruchteil der ursprünglichen Gaskonzentration am Top der dichten Schicht an, steht dem weiteren konvektiven Transport zur Verfügung, und wird an der Oberfläche gemessen. Unter Benutzung der Diffusionsgleichung, des gemessenen Gaspotentials, der Mächtigkeit und der Diffusionskonstante für Gas der Schicht, Migrationszeit und pT-Bedingungen kann das ursprüngliche Gaspotential unter der dichten Schicht berechnet werden. Diese Zusammenhänge eröffnen darüberhinaus die Möglichkeit, durch das vorliegende Verfahren laterale Änderungen in der Effektivität der Abdeckung von Lagerstätten abzuschätzen, wenn das Gaspotential unterhalb der Abdeckung konstant oder bekannt ist.

## 3. Änderungen der Gassignatur bei Transport in gelöster Form durch Medien

Wie oben beschrieben, ist der schnellste Prozeß der Migration von Gasen in oberflächennahe Schichten der konvektive Transport durch Wasser. Wasser transportiert das Gas in gelöster Form durch den Porenraum, wobei ein Teil der Gasmoleküle in die freie Gasphase übertritt, ein anderer Teil von den an die Poren angrenzenden Tonen adsorbiert wird. Die Phasenübergänge gelöste Phase -> freie Phase bzw. gelöste Phase -> adsorbierte Phase sind Gleichgewichtszustände. Diese stellen sich sehr schnell ein (i=n Schritte im Laborexperiment nach wenigen Stunden), so daß sie unter geologischen Bedingungen stets erreicht sein dürften. Für beide Phasenübergänge und für Methan werden in der Natur und im Experiment Veränderungen der Isotopenverhältnisse zwischen schwerem und leichtem Isotop $\delta13C1$ und $\delta DC1$ beobachtet, die durch den jeweiligen Fraktionierungsfaktor $\alpha$ zwischen schwerem und leichtem Isotop charakterisiert werden. Da entlang des Migrationsweges von einer Kohlenwasserstoffquelle an die Oberfläche ein Teil des Methans das System aufgrund von Anlagerung an tonige Partikel verläßt, findet theoretisch eine ständige Veränderung der isotopischen Zusammensetzung des Methans in Lösung statt. Praktisch jedoch ist das Mengenverhältnis von adsorbiertem zu transportiertem Methan im System so klein, daß diese Veränderung vernachlässigbar ist. Aus diesem Grund ist es möglich, das Potential und die Eigenschaften einer tiefliegenden Kohlenwasserstoffquelle ausschließlich durch Vermessung einer Oberflächenprobe oder einer Bohrprobe zu bestimmen, unabhängig davon, welchen Weg die Informationsübertragung genommen hat. Nur der letzte Phasenübergang innerhalb des beprobten Sedimentes ist entscheidend. Diese Veränderungen gilt es nun durch einen theoretischen Ansatz zu beschreiben und an in der Natur beobachteten Veränderungen zu eichen.

Für Phasenübergänge hat FUEX 1980 eine Formel abgeleitet, die die Konzentration von Methan in der freien Phase xgn mit der Isotopenfraktionierung (Isotopenshift) F und einem Faktor k verbindet, und er hat durch Messungen dieser Parameter im Laborexperiment den Fraktionierungsfaktor $\alpha$ für den Übergang gelöstes Methan -> freies Methan und für das Isotopenverhältnis $\delta 13C1$ bestimmt. Im folgenden sind Gl. (1) bis (7) und (9) von FUEX 1980 übernommen. Gl. (8) und (10) bis (15) sind daraus entwickelte Ableitungen zur genaueren Bestimmung des Isotopenshifts.

Definitionen und Ableitungen aus den Definitionen:

$$xgi = 12Cgi/12C0$$

ist die Molfraktion von 12C0 in der Gasphase nach dem i-ten Schritt.

$$xai = 12Cai/12C0$$

ist die Molfraktion von 12C0 in gelöster Phase nach dem i-ten Schritt außer dem in den vorhergehenden i-1-ten Schritten gelösten Gas.

$$\delta = (\frac{Rprobe}{Rstandard} - 1) \times 1000\ [‰] \quad (1)$$

ist die Definition des Isotopenverhältnisses, wobei

Rprobe = 13C/12C bzw. D/H des Methan

Rstandard = 13C/12C bzw. D/H im Standard

$$k = xgi/xai \quad (2)$$

eine Konstante, die von rein geologischen Faktoren abhängt (s. Kap. 4).

$$k = 12Cgi/12Cai\ bzw.\ Hgi/ai \quad (3)$$

$$\alpha = Rai/Rgi \quad (4)$$

ist die Definition des Fraktionierungsfaktors. Aus (1) und (4) folgt:

$$\alpha = \frac{\delta ai + 1000}{\delta gi + 1000} \quad (5)$$

Die benutzte Massenbilanz für 13C:

$$13Cgi - 1 = 13Cai + 13Cgi \quad (6)$$

Die benutzte Massenbilanz für 12C:

$$12Cgi - 1 = 12Cai + 12Cgi \quad (7)$$

oder gleichsinnig für D und H.

Durch gegenseitiges Einsetzen der Gleichungen (1) bis (7) ergibt sich für den Isostopenshift delta $\delta gi$ des freien Methans nach dem i-ten Schritt als geometrische Reihe:

$$delta\ \delta gi = delta\ \delta g1 \times \frac{(\frac{1+k}{\alpha+k})^2 - 1}{\frac{1-\alpha}{\alpha+k}} \quad (8)$$

Da sich ebenfalls aus dem gegenseitigen Einsetzen für delta g1 des ersten Schrittes ergibt:

$$delta\ \delta g1 = \frac{1000\ (1-\alpha)}{\alpha+k} \quad (9)$$

folgt aus (8) und (9):

$$delta\ \delta gi = \frac{1000\ (1-\alpha)}{\alpha+k} \times \frac{(\frac{1+k}{\alpha+k})^2 - 1}{\frac{1-\alpha}{\alpha+k}}$$

$$delta\ \delta gi = 1000 \times ((\frac{1+k}{\alpha+k})^2 - 1) \quad (10)$$

Delta $\delta gn$ sei die Summe der Isotopenshifte bei nach n Schritten vollständiger Fraktionierung (i=n), dann ist:

$$delta\ \delta gn = F \quad (11)$$

Aus (10) und (11) folgt:

$$F = 1000 \times ((\frac{1+k}{\alpha+k})^n - 1) \quad (12)$$

$$\frac{F}{1000} + 1 = (\frac{1+k}{\alpha+k})^n$$

$$\ln (\frac{F+1000}{1000}) = n \times \ln (\frac{1+k}{\alpha+k})$$

$$n = \frac{\ln\left(\frac{F + 1000}{1000}\right)}{\ln\left(\frac{1 + k}{\alpha + k}\right)} \quad (13)$$

Für die erreichte Methankonzentration in der Gasphase xgn nach n Schritten ergibt sich:

$$xgn = \left(\frac{1 + k}{k}\right)^{-n} = \exp - \left[n \times \ln\frac{1 + k}{k}\right] \quad (14)$$

und aus (13) und (14):

$$xgn = \exp - \left[\frac{\ln\left(\frac{1 + k}{k}\right)}{\ln\left(\frac{1 + k}{\alpha + k}\right)} \times \ln\left(\frac{F + 1000}{1000}\right)\right] \quad (15)$$

Da mit dieser Gleichung im folgenden Phasenübergänge gelöstes Methan -> adsorbiertes Methan behandelt werden sollen, wird die Bezeichnung Faktor k durch Faktor A und xgn durch xsn für Adsorption ersetzt:

$$xsn = \exp - \left[\frac{\ln\left(\frac{1 + A}{A}\right)}{\ln\left(\frac{1 + A}{\alpha + A}\right)} \times \ln\left(\frac{F + 1000}{1000}\right)\right] \quad (16)$$

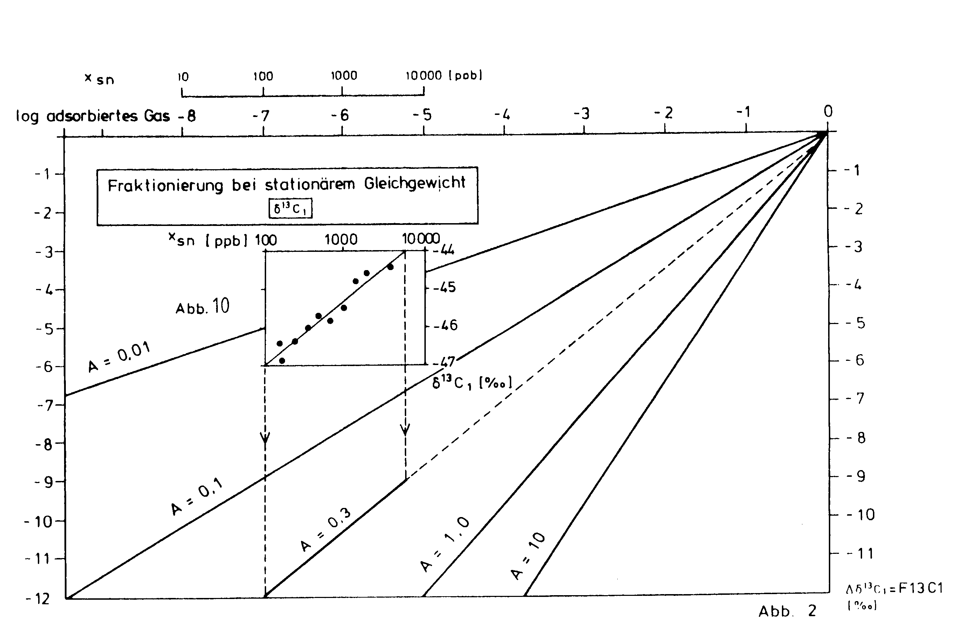

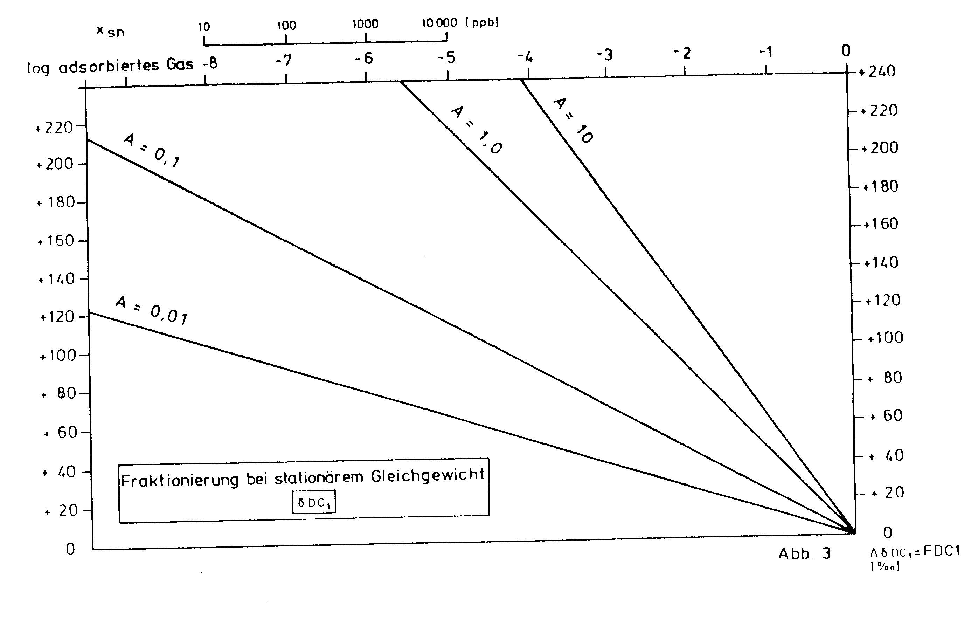

Gleichung (16) beschreibt die theoretische Beziehung zwischen der Methankonzentration in adsorbiertem Zustand xsn und dem Isotopenshift F nach Erreichung des Gleichgewichtszustandes, sowie dem Fraktionierungsfaktor $\alpha$ zwischen dem jeweiligen schwereren und dem leichteren Isotop bei Adsorption und einem geologischen Faktor A. Um die Gleichung funktionsfähig zu machen, werden in den folgenden Kapiteln 3.1 und 3.2 die Fraktionierungsfaktoren für den Übergang gelöstes Methan -> adsorbiertes Methan für 13C/12C und D/H aus case histories bestimmt. Die Zusammenhänge zwischen den dann noch übrigbleibenden Variablen xsn, A und F sind für $\delta$13C1 in Abb. 2 und für $\delta$DC1 in Abb. 3 graphisch dargestellt.

**3.1 Änderung von $\delta$13C1**

Zur Bestimmung des Fraktionierungsfaktors $\alpha$ zwischen den Isotopen 13C und 12C beim Übergang von der gelösten in die adsorbierte Phase werden Meßserien im Kreideprofil der Bohrungen Herbern 45/45 E1 und Wulfen 6 (Münsterland, Deutschland, LOMMERZHEIM 1988) herangezogen. Dort wurden die Methanausbeuten der adsorbierten Gase ("Blendergase") und die $\delta$13C1-Werte als Profile durch die Kreide vermessen. Dabei liegt der spezielle Fall vor, daß die Lithologie der beprobten Sedimente - und damit auch ihre Permeabilität - recht einheitlich ist.

Bei den Datenprofilen beider Bohrungen fällt auf, daß neben Schwankungen von Ausbeute und Isotopenverhältnis des Methans, die sicher auf Schwankungen der lokalen Permeabilitäten des Gesteins zurückzuführen sind, sich generelle Trends abzeichnen. Bezogen auf die Durchschnittsmächtigkeit der Kreide von ca. 1000 m nimmt die Ausbeute von der Basis Kreide bis zur Oberfläche um ca. den Faktor 3 ab, während der Isotopenshift F (delta $\delta$13C1) um ca. den Faktor 2 zunimmt. Wie aus der graphischen Darstellung der Gleichung (16) in Abb. 2 ersichtlich, können Änderungen in diesen Proportionen nur auf einer Änderung des Faktors A beruhen, und zwar auf seiner Zunahme von der Basis Kreide bis an die Oberfläche.

Das Zusammenspiel der Parameter, die Faktor A bestimmen, ist in Kap. 4 abgeleitet und in Gleichung (25) dargestellt. Der Faktor A wird von dem Gaspotential des Muttergesteins, der Adsorptivität q, der Probentemperatur T, der Löslichkeit des Methans in Wasser, Porosität $\phi$ und Permeabilität K der Probe, der Migrationsentfernung h2, der Migrationszeit t, der Hydrodynamik des gastransportierenden Wassers und der dynamischen Viskosität $\mu$ des Wassers bestimmt. Dabei ist das Gaspotential des die Kreide unterlagernden Karbons und seiner Kohlen in der Zeit t seit Ablagerung der Kreideschichten sowie das originale $\delta$13C1 des Methans aus den Kohlen konstant und durch eigene Arbeiten in diesem Gebiet bekannt. Ferner sind bei Betrachtung des o.g. Datentrends die Parameter q, $\phi$ und K sowie der vertikale Wasserfluß als über das Profil konstant anzusehen. Als Variable, die die Veränderung des Faktors A begründen, bleiben also die Probentemperatur T mit der Tiefe, die sich daraus verändernde dynamische Wasserviskosität $\mu$ sowie untergeordnet die Migrationsdistanz h2 übrig.

Aus der Probentiefe (bzw. h2) wurde bei der Bohrung Herbern 45/45 E1 über den Temperaturgradienten 4,45°C/100 m, bei der Bohrung Wulfen 65 über den Gradienten 2,92°C/100 m (LOMMERZHEIM 1988) die jeweilige Probentemperatur bestimmt und in Änderungen der Wasserviskosität $\mu$ umgesetzt (MATTHESS 1973). Mit den so bestimmten Variablen h2, T und $\mu$ und den o.g. Konstanten wurde für jeden Probenpunkt nach Gleichung (25) der zugehörige Faktor A bestimmt.

Nun liegen also für die Profile der beiden Bohrungen Datensätze mit den Angaben über Ausbeute an adsorbiertem Methan xsn, Isotopenshift F (delta $\delta 13C1$ = gemessenes $\delta 13C1$ - originales $\delta 13C1_o$) und Faktor A vor. Daraus läßt sich der Fraktionierungsfaktor $\alpha$ für 13C und 12C bestimmen. Das geschieht durch Umformung von Gl. (16) und in folgendem Regressionsansatz:

$$\ln xsn = - \frac{\ln(\frac{1+A}{A})}{\ln(\frac{1+A}{\alpha+A})} \times \ln(\frac{F+1000}{1000})$$

$$[\ln(1+A) - \ln(\alpha+A)]\ln xsn = - \ln(\frac{1+A}{A}) \times \ln(\frac{F+1000}{1000})$$

$$\ln xsn \times \ln(\alpha+A) = \ln(\frac{1+A}{A}) \times \ln(\frac{F+1000}{1000}) + \ln xsn \times \ln(1+A)$$

$$\ln(\alpha+A) = \frac{1}{\ln xsn} \times \ln(\frac{1+A}{A}) \times \ln(\frac{F+1000}{1000}) + \ln(1+A)$$

$$\alpha+A = (1+A)[(\frac{1+A}{A})^{\frac{\ln\frac{F+1000}{1000}}{\ln xsn}}]$$

$$\alpha = - A + (1+A)[(\frac{1+A}{A})^{\frac{\ln\frac{F+1000}{1000}}{\ln xsn}}] \quad (17)$$

Der sich aus den Datensets und Gl. (17) errechnete Fraktionierungsfaktor $\alpha$ zwischen 13C und 12C für den Übergang gelöstes Methan -> adsorbiertes Methan beträgt:

$$\alpha 13C1/12C1 = 1,0014493$$

Gleichung (16) unter Verwendung von $\alpha 13C1/12C1$ ist in Abb. 2 graphisch dargestellt.

### 3.2 Änderung von $\delta DC1$

Die gleiche Prozedur wird zur Bestimmung des Fraktionierungsfaktors $\alpha DC1/HC1$ zwischen Deuterium und Wasserstoff des Methans angewendet. Für dieselben Probenpunkte liegen auch Messungen von $\delta DC1$ vor (LOMMERZHEIM 1988); folglich wird hier für den Isotopenshift F das delta $\delta DC1$ = gemessenes $\delta DC1$ - originales $\delta DC1_o$ in Gleichung (17) eingesetzt, die übrigen Parameter bleiben wie bei der Rechnung in Kap. 3.1. Der so errechnete Fraktionierungsfaktor $\alpha$ zwischen D und H und für den Übergang gelöstes Methan -> adsorbiertes Methan beträgt:

$$\alpha DC1/HC1 = 0,9752528$$

Gleichung (16) unter Verwendung von $\alpha DC1/HC1$ ist in Abb. 3 graphisch dargestellt.

Der Vergleich von $\alpha DC1/HC1$ mit $\alpha 13C1/12C1$ zeigt, daß:

- $\delta DC1$ ca. 18mal stärker fraktioniert als $\delta 13C1$. Diese Beobachtung stimmt größenordnungsmäßig mit der Erfahrung bei anderen Fraktionierungsprozessen delta $\delta DC1$/delta$\delta$ 13C1 in der Natur sowie bei Entlösungsexperimenten von FUEX 1980 (30-40), GUNTER & GLEASON 1971 (6-16) und GANT & YANG 1964 überein.
- Während $\delta 13C1$ bei zunehmender Fraktionierung negativer wird, wird $\delta DC1$ positiver. Auch das ist eine Beobachtung, die mit Laborerfahrung übereinstimmt (FUEX 1980).

### 3.3 Änderungen im $\delta 13C$ höherer Kohlenwasserstoffe

Trotz der geringen Ausbeuten von C2 und C3 in Oberflächensedimenten kann heute auch an diesen Mengen $\delta 13C2$ und $\delta 13C3$ gemessen werden. In adsorbierten Gasen über einer trockenen, humischen Erdgasquelle (Muttergestein oder Lagerstätte) wird i.A. C2 in Ausbeuten 0,3mal der Methanausbeute beobachtet. Ferner fällt an den Isotopenverhältnissen von C2 und C3 auf, daß sich diese entlang von Migrationswegen unter sonst gleichen Bedingungen (s. Kap. 3.1) im Gegensatz zum Isotopenverhältnis des Methan weniger verändern; so z.B. in den case histories Herbern 45/45 E1 und Wulfen 6 (LOMMERZHEIM 1988) zu sehen.

Es liegt bei C2 und C3 ein sehr viel geringeres Angebot aus der Gasquelle und eine viel größere Adsorptivität als bei Methan vor. Nach der Gleichung (25) bestimmt aber das Produkt aus Gasangebot und Adsorptivität bei sonst gleichen Bedingungen die Größe des Faktors A. Faktor A beträgt also im genannten Fall bei C2 0,3mal Faktor A bei C1. Gleichung (17) zeigt nun, daß bei Verkleinerung von Faktor A bei gleichbleibendem Fraktionierungsfaktor $\alpha$ der Isotopenshift F stark abnimmt. Das wird bei C2 gegenüber C1 auch beobachtet. Das geringere Gasangebot aus der Quelle im Untergrund ist also im Wesentlichen für den geringeren Isotopenshift bei C2 und C3 verantwortlich.

Die Erfahrungen mit dem vorliegenden Verfahren zeigen, daß die Fraktionierung von C2 und C3 denselben Gesetzen Gleichung (17) und (25) gehorchen wie Methan, vorausgesetzt, geeignete Fraktionierungsfaktoren

$\alpha$ können aus case histories abgeleitet werden. Nach JAMES 1990 sind jedoch die $\delta$-Werte von Lagerstätten-Ethan und -Propan überwiegend reifeabhängig und kaum faziesabhängig. Das würde die Interpretationsmöglichkeiten eines Verfahrens einschränken, das auf C2 und C3 beruht.

**4. Zusammenhang zwischen der Änderung der $\delta$-Werte, der Gasausbeuten und verschiedener geologischer Parameter - das Interpretationsverfahren**

Bei Betrachtung des Phasenüberganges gelöstes -> adsorbiertes Methan gilt für Faktor A gemäß Gleichung (3) nach dem i-ten Schritt:

$$A = 12Csi/12Cai \text{ bzw. } Hsi/Hai \quad (18)$$

A ist gleich dem Verhältnis von 12C bzw. H in adsorbierter zu dem in gelöster Phase. Damit ist A abhängig von der Adsorptivität q des leichten Gases an Ton, dem Verhältnis Gasangebot zu Wasserangebot über die Zeit für die vermessene Probe und von der Löslichkeit $\cap$ des leichten Gases in Wasser bei dessen Salinität und den pT-Bedingungen an der Oberfläche.

$$A = \frac{\cap \text{ x q x Gasangebot}}{\text{Wasserangebot}} \quad (19)$$

Für einen diskreten Zeitpunkt während der Gasabspaltung aus dem Muttergestein und der Migration des Wassers gilt:

$$A = \frac{\cap[\frac{cm^3CH_4}{cm^3H_2O}]xq[\frac{cm^3CH_4}{cm^3Ton}]xdeltaG[\frac{cm^3CH_4}{gTOC \text{ x } 0,1\%R_o}]xTOC[\%]xF[m^2]xh_1[m]x\Gamma[\frac{g}{cm^3}]}{F[m^2]xh_2[m]x\Phi[\%]} \quad (20)$$

Dabei ist delta G die differentielle Methanabspaltung aus 1 g organischen Kohlenstoffs TOC bei einem Inkohlungsschritt von 0,1 %Ro, $\Gamma$ das spezifische Gewicht des Muttergesteins, h2 die Migrationsdistanz zur Oberfläche und $\phi$ die Porosität der durchwanderten Schichten.

Integriert man über die Zeit, so muß man bei dem Term "Gasangebot" die Reifeentwicklung mit der Zeit delta Ro/t [%/Jahr], bei dem Term "Wasserangebot" den Durchfluß des Wassers durch die Gesteinssäule berücksichtigen. Die durch einen Querschnitt F in 1 sec hindurchfließende Wassermenge Q ist aber nach DARCY von dem hydraulischen Druckgradienten i [m/m] und der Durchlässigkeit kf [m/sec] abhängig:

$$\frac{Q}{F} = v = k_f \text{ x } i \quad (21)$$

v nennt man Filtergeschwindigkeit in [m/sec]. Man ersetzt kf durch die Permeabilität K [darcy = $10^{-5}$ m/sec] und i[m/m] durch i[bar/m = 10 m/m]. Nach GABENER 1983 gilt die lineare Form des DARCY'schen Gesetzes nur im Bereich großer Druckgradienten und großer Permeabilitäten. Unterhalb von Schwellenwerten für beide Parameter wird die Änderung der Filtergeschwindigkeit bei abnehmendem K oder i zunehmend kleiner und geht mit K und i gegen 0. GABENER 1983 hat diese Abhängigkeiten als eine Kurvenschar $v = f(K,i)$ beschrieben, bei der für jedes K eine Kurve $v = f(i)$ gilt in der Form einer Parabel, die bei höheren i-Werten in eine Gerade übergeht.

Erfahrungen mit dem Verfahren bestätigen diese Erkenntnis und ermöglichen darüberhinaus die Abschätzung der Schwellenwerte $K_o$ und $i_o$. $K_o$ liegt etwa bei $10^{-3}$ darcy, damit bewegt sich das Verfahren unter geologischen Bedingungen im Grenzbereich gekrümmte/lineare Funktion für $v = f(K)$. $i_o$ liegt etwa bei 1 [bar/m], damit bewegt sich das Verfahren unter geologischen Bedingungen stets im gekrümmten Bereich der Funktion $v = f(i)$.

Hier wird daher die Funktion $v = f(K,i)$ nicht als Kurvenschar, sondern als eine Kurve $v = f(K)$ dargestellt, die dann streng genommen nur für einen engen Bereich von i gilt, und zwar erfahrungsgemäß für den Bereich um i = 0,01. Da der Parabelansatz für den gekrümmten Bereich nach den hier gemachten Erfahrungen zu stark lithologieabhängig, also zu stark gekrümmt ist, wird im Gegensatz zu GABENER 1983 eine Hyperbel modelliert, die asymptotisch in eine Gerade übergeht. Sie hat dazu noch den Vorteil, von Dimensionen für K und i unabhängig zu sein:

$$v = i \text{ x } (\sqrt{K_o^2 + K^2} - K_o) \quad (22)$$

wobei $K_o = 10^{-3}$ ist, und die Funktion streng genommen nur im engeren Bereich von i = 0,01 [bar/m] gilt, da $K_o = f(i)$ ist.

Die treibende Kraft der Wasserbewegung ist der vertikal aufwärts gerichtete, überhydrostatische Druckgradient i über die Zeit t. Nach MAGARA 1987 kann man die Druckgeschichte aus der Kompaktionsgeschichte (hydraulic pressure), und zusätzlich aus der Temperaturgeschichte (aquathermal pressure, MAGARA 1975) ableiten. Aus (20) folgt dann:

$$A = \frac{\cap \times q \times delta\ G \times TOC \times h1 \times \Gamma \times 10\ delta\ Ro}{(\varnothing \times h2) + \left(\dfrac{i \times (\sqrt{K_o^2 + K^2} - K_o) \times 3{,}1 \times 10^2 \times t}{\mu}\right)} \qquad (23)$$

wobei $\mu$ die dynamische Viskosität des Wassers [centipoise] bei der Temperatur T [°C] ist.

Die Adsorptivität q von Methan an Ton ist aber eine Funktion der Temperatur (ADAMSON 1967). Aus dem Beispiel Methan an Aktivkohle läßt sich nach den Werten von LANDOLT & BÖRNSTEIN 1956 folgende Beziehung zwischen q bei der Temperatur T, q bei der Temperatur 10°C und T ableiten:

$$q(T) = q10°C \times \pi \times \frac{1}{\sqrt{T}} \qquad (24)$$

Für eine leichtere Handhabung von Gleichung (22) bei Oberflächenbedingungen wird q(T) durch q10°C und T ersetzt:

$$A = \frac{\cap \times \pi \times q_{10° C} \times delta\ G \times TOC \times h_1 \times \Gamma \times 10\ delta\ R_o}{\sqrt{T}\ [(\Phi \times h_2) + \left(\dfrac{i \times (\sqrt{K_o^2 + K^2} - K_o) \times 3{,}1 \times 10^2 \times t}{\mu}\right)]} \qquad (25)$$

Die in Gleichung (25) genannten geologischen Parameter hängen also über Gleichung (25) mit dem Faktor A, über Gleichungen (25) und (16) mit den an der Oberfläche gemessenen Gasausbeuten xsn und den Isotopenshiften zusammen. Da die gemessenen Parameter xsn und Isotopenverhältnis $\delta$ auf den Adsorptions-/Desorptionsverhältnissen an der vermessenen Oberflächenprobe beruhen, sind als die petrophysikalischen Parameter q10°C, T, $\phi$, K und $\mu$ diejenigen der Oberflächenprobe zu nehmen. Das heißt: das Gaspotential eines Muttergesteins oder einer Lagerstätte im Untergrund

delta G x TOC x h1 x $\Gamma$ x 10 delta Ro [m³/m² Ober fläche],

dessen originaler $\delta$-Wert und die an dem Oberflächensediment gemessenen Parameter $\delta$-Wert, Methanausbeute und Petrophysik hängen miteinander zusammen. Dabei muß man zur Bestimmung des Gaspotentials neben den letzteren drei erfindungsgemäß gemessenen Oberflächenparametern noch den originalen $\delta$-Wert, also Reife und Fazies des Muttergesteins kennen oder umgekehrt. Das Ziel ist vorliegend aber die Bestimmung aller drei Parameter: KW-Potential, Reife und Fazies des Muttergesteins aus den Oberflächenmessungen. Das erreicht man erfindungsgemäß auf zweierlei Weise:

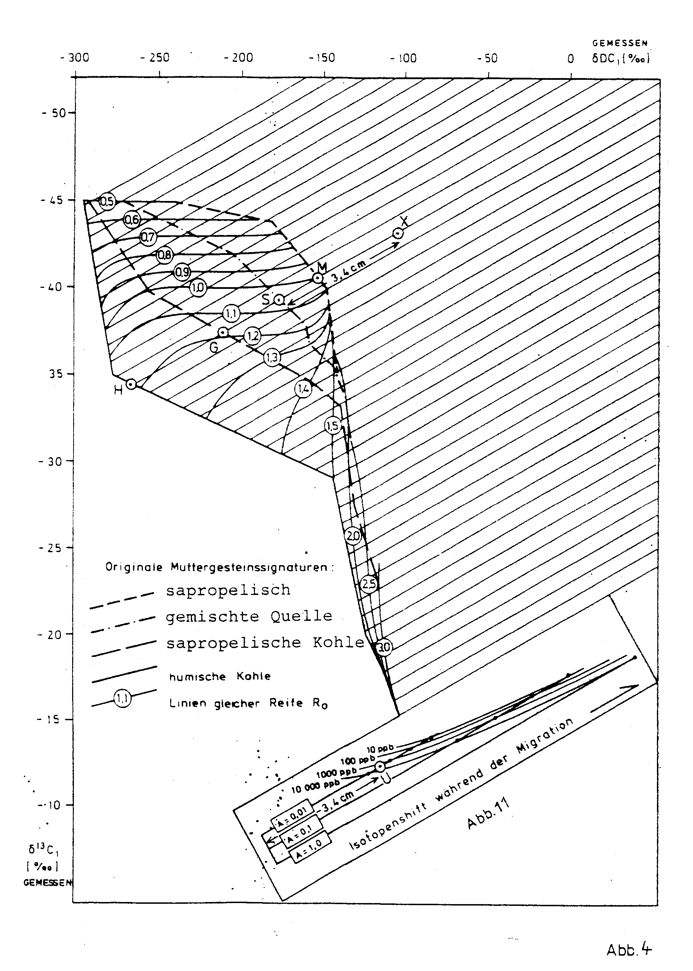

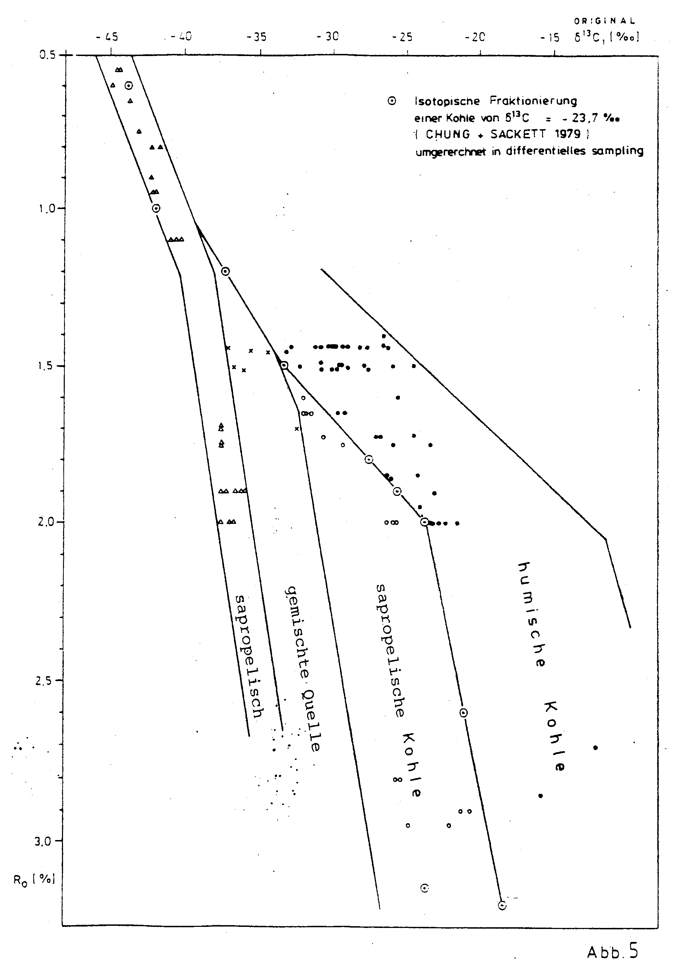

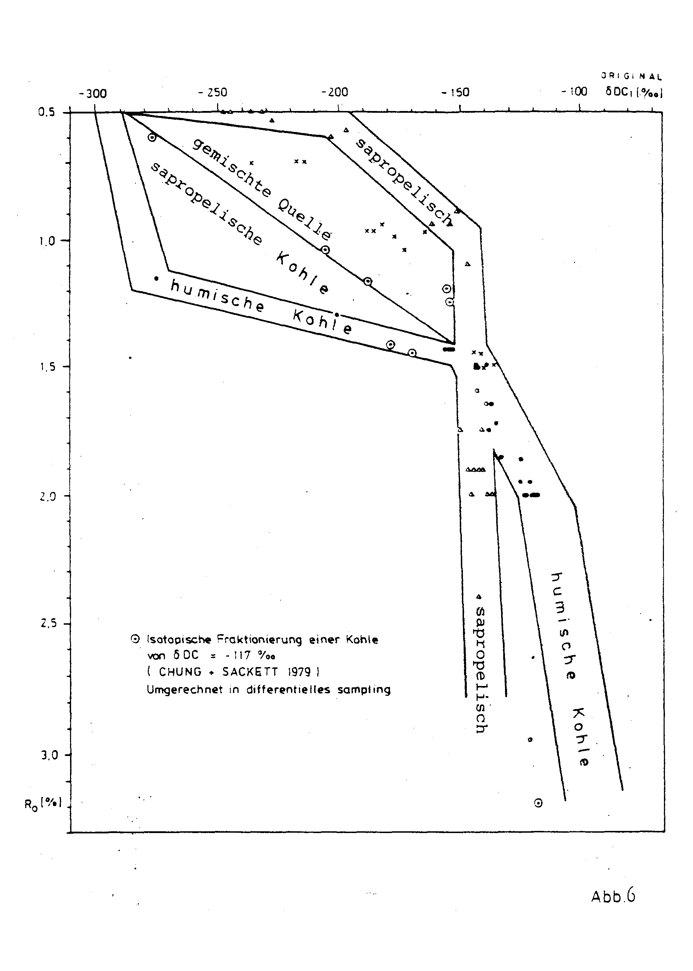

1. Die Berechnung aus Gleichungen (25) und (16) wird für die zwei Isotopenverhältnisse $\delta$13C1 und $\delta$DC1 ausgeführt. Das erhöht die Anzahl der Gleichungen für die drei Unbekannten auf zwei. Abb. 4 zeigt das verbesserte Interpretationsverfahren bei Benutzung von beiden Isotopenverhältnissen. Die Abbildung ist eine Kombination aus den Abb. 2, 3, 5 und 6. In dem Feld, das von den Achsen mit den gemessenen $\delta$13C1 und $\delta$DC1 beschrieben wird, sind die Spuren der in der Natur vorkommenden $\delta$-Paare für verschiedene Fazies und Reifen nach Abb. 5 und 6 eingetragen. Die Linienschar, die von diesen Spuren aus zum negativeren $\delta$13C1 und zum positiveren DC1 verläuft, beschreibt das Fraktionierungsgesetz (16) in dem Verhältnis zwischen $\delta$13C1 (Abb. 2) und $\delta$DC1 (Abb. 3). Das heißt, der Isotopenshift des originalen $\delta$-Paares aus dem Muttergestein oder der Lagerstätte verläuft strikt parallel zu diesen Linien. Der Grad der Veränderung ist eine Funktion von Faktor A und der gemessenen Methanausbeute, in Abb. 11 als Entfernungen auf der Linienschar dargestellt. Von den drei Variablen Faktor A, Fazies und Reife des Muttergesteins können also mit Hilfe von Abb. 4 alle bestimmt werden, wenn außer den Oberflächenmessungen eine bekannt ist.

2. Wenn nicht von der Geologie des Untergrundes her Angaben über entweder organische Fazies oder Reifezustand des Muttergesteins vorliegen, kann die weitere Variable ermittelt werden durch die Bestimmung des Faktors A aus Korrelationen innerhalb von Daten eines surveys: Es können die gemessenen Isotopenwerte gegen die zugehörigen Ausbeuten bei Gasen aus der gleichen Quelle und bei gleicher Probenlithologie aufgetragen werden. Theoretisch geben dann die Ausbeuteverhältnisse des Gases die Verhältnisse zwischen den spezifischen inneren Oberflächen der Proben wieder. Die Regressionsgerade durch die Datenpunkte wird mit den Abbildungen 2 und 3 verglichen, und so Faktor A bestimmt. Dieses Verfahren erfordert wiederholte Beprobung desselben Sedimentes an derselben Stelle (Bohrung). Es wird wiederholt, wenn sich die Muttergesteinseigenschaften ändern.

## 5. Geologische Bedeutung der originalen $\delta$-Werte

Wenn durch das in Kap. 4 beschriebene erfindungsgemäße Interpretationsverfahren das originale Paar $\delta$13C1$_o$/$\delta$DC1$_o$ des Ausgangsgases sowie das Gaspotential der Quelle im Untergrund bestimmt worden ist, erhebt sich die Frage nach deren geologisch-exploratorischer Bedeutung.

## 5.1 Bedeutung von $\delta$13C1

$\delta13C1$ eines aus dem Muttergestein abgespaltenen oder Lagerstättengases ist generell eine Funktion der organischen Fazies und des Reifezustandes des Muttergesteins zur Zeit der Abspaltung (STAHL 1975, FABER 1987, KETTEL 1989, CLAYTON 1991). Man kann den Isotopenwert eines Lagerstättenmethans direkt auf den Zustand des Muttergesteins übertragen, da aufgrund der großen Konzentrationen in Lagerstätten keine Isotopenfraktionierung zwischen abgespaltenem und akkumuliertem Methan stattfindet (FUEX 1980) (s. auch Kap. 1). Wie man auch bei Pyrolyse im Labormaßstab festgestellt hat (CHUNG & SACKETT 1979), wird das abgespaltene Methan im Laufe der Reifezunahme der Ausgangssubstanz schwerer, d.h. das $\delta13C1$ positiver. Das Isotopenverhältnis ist auch abhängig von der organischen Fazies des Muttergesteins, was bewirkt, daß Methane aus humischen Substanzen ("Kohlegase") positiver sind als Methane aus sapropelischen Substanzen ("Erdölmuttergesteine") gleicher Reife (FABER 1987). Noch deutlicher wird diese Abhängigkeit von Fazies und Reife bei der im folgenden beschriebenen Analyse norddeutscher "Kohlegase" gemäß vorliegender Erfindung.

Norddeutsche nicht-assoziierte Erdgase in Oberkarbon- und Rotliegendspeichern (case histories nach FABER et al. 1979) entstammen vorwiegend den Kohlen und Tonsteinen der unterlagernden oberkarbonischen Westfal A bis D-Serien. Diese können allerdings zwischen wenigen 100 m und ca. 3000 m mächtig sein und sich in unterschiedlichen Reifezuständen befinden. Das Isotopenverhältnis eines Lagerstättenmethans läßt sich daher in den meisten Fällen nicht einem diskreten Reifewert eines Muttergesteins zuordnen. Deshalb wird für jede unterlagernde Muttergesteinssektion ein "effektiver" Reifewert berechnet, der für den $\delta$-Wert der Lagerstätte verantwortlich ist, und dann in Abb. 5 gegenüber dem $\delta$-Wert aufgetragen:

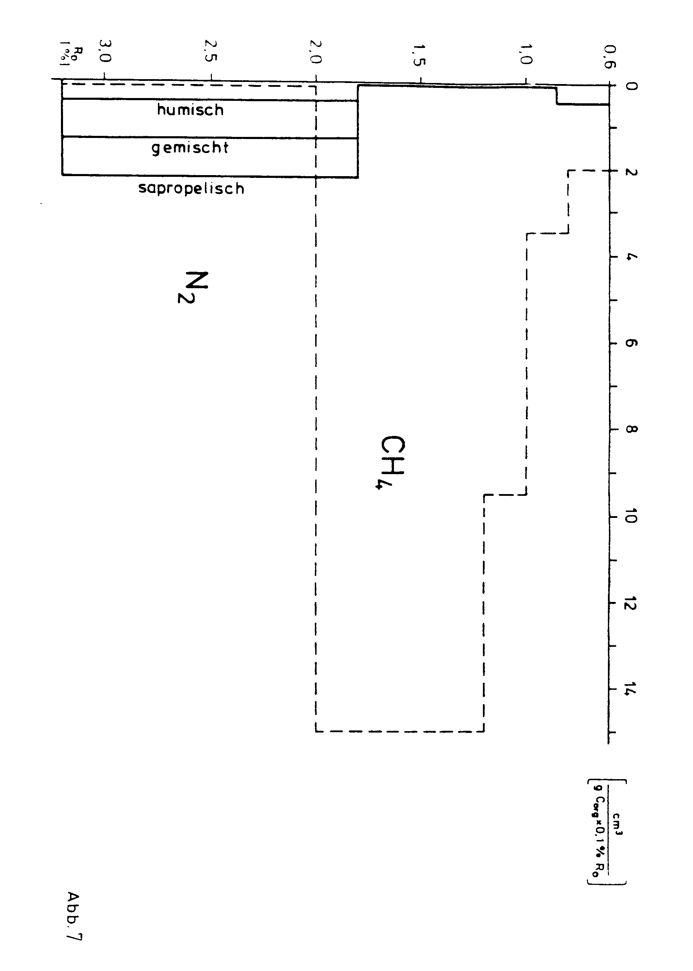

Das Isotopenverhältnis eines Lagerstättenmethans beruht hier aus einer Mischung von Methanen aus unterschiedlichen Reifestadien. Die Mischung ist abhängig von im Muttergestein repräsentierten Reifeintervall, gewichtet nach der differentiellen Gasabspaltung mit der Reife (s. Genesemodell Abb. 7). Bei der Beurteilung der für die Gaslagerstättenbildung relevanten Gasabspaltung muß von der pyrolytischen Gasbildungskurve die der Gasadsorption in der Kohle selbst abgezogen werden. In Abb. 7 wird ein Modell der differentiellen Methanabspaltung mit der Reife für humische Muttergesteine vorgestellt, dessen pyrolytischer Ansatz auf JÜNTGEN & KLEIN 1975, ROHRBACK et al. 1984 und WELTE et al. 1984, und dessen adsorptiver Ansatz auf JÜNTGEN & KARWEIL 1966 und HEWEL-BUNDERMANN & JÜNTGEN 1988 beruhen. Das Ergebnis stimmt gut überein mit dem Genesemodell von SLUIJK & NEDERLOF 1984 und Messungen von ROHRBACK et al. 1984, SACKETT 1978 und KLEIN & LÖCKEN 1986.

Zur Bestimmung eines "effektiven Reifewertes" wurde zunächst festgestellt, welche im Genesemodell bezeichneten Reifeintervalle in der natürlichen Muttergesteinssektion vorhanden sind. Die Mittelwerte dieser Intervalle unterschiedlicher differentieller Methanabspaltung wurden mit Faktoren x, y, z, a multipliziert, die der Methanabspaltung in diesem Intervall proportional sind.

$$x + y + z + a = 1 \quad (31)$$

Aus der Summe der so gewichteten Mittelwerte errechnet sich die "effektive Reife". Diese wird dann in Abb. 5 gegen den $\delta13C1$-Wert der überlagernden Gaslagerstätte aufgetragen. Bei diesem Verfahren ergibt sich erstmals eine sinnvolle Funktion der "Kohlegase" mit der Reife: Ihre Isotopenkennkurve spaltet sich bei ca. Ro = 1,0% - etwa dem Beginn stärkerer Methangenerierung - von der sapropelischen Kurve unter stärkerer Fraktionierung ab. Dabei ist der Grad der isotopischen Fraktionierung ein Maß der differentiellen Gasgenese (Abb. 7). Daher nimmt die Fraktionierung mit der Reife auch bei Reifen über Ro = 2,0% wieder ab. Diese Charakteristik gilt in unterschiedlichem Maße für verschiedene organische Fazien innerhalb des humischen und im Übergang zum sapropelischen Faziesbereich, indem die Methane zum sapropelischen hin leichter werden. Die unterschiedlichen Muttergesteinsfazien für die einzelnen case histories lassen sich innerhalb des europäischen Oberkarbonbeckens kartieren (KETTEL 1989).

Trotz der Abhängigkeit von Reife und Fazies ist eine gewisse Streuung der $\delta13C1$-Werte der "Kohlegase" zu beobachten, die stärker ist als die der "marinen" Gase nach FABER 1987. Das könnte die speziellen Bedingungen norddeutscher Gaslagerstätten widerspiegeln: sie sind fast durchweg "alt" und durch mächtiges Zechsteinsalz effektiv abgedeckt, das Gasverluste seit der Lagerstättenbildung nur in Form von Diffusion zuläßt (s. Kap. 2). Die Diffusionsgeschwindigkeit ist aber umgekehrt proportional dem Atomgewicht des diffundierenden Isotops (CRAIG et al. 1988). So kann das leichtere Isotop schneller diffundieren, und im Lagerstättenmethan in dem Maße, in dem Zeit nach der letzten Füllung der Lagerstätte vergeht, abgereichert sein. In Fällen mit langen solchen "Stillstandszeiten" kann das dazu führen, daß das Isotopenverhältnis des Lagerstättenmethans positiver ist, als es dem Muttergesteinszustand entspricht.

Zum Vergleich dieses Fraktionierungsmodells nach case histories mit Labormessungen wurden in Abb. 5 die Ergebnisse der Pyrolyseversuche von CHUNG & SACKETT 1979 an einer Kohle der Übergangsfazies (REDDING et al. 1980) humische Kohle / sapropelische Kohle eingetragen, nachdem sie von integralem auf differentielles sampling umgerechnet wurden. Sie liegen exakt auf der sich aus den case histories ergebenden Trennlinie zwischen beiden Fazien.

Die Lage eines case history-Punktes im Diagramm Abb. 5 verbindet also den originalen oder Lagerstätten-Isotopenwert mit der Reife und der Fazies des abspaltenden Muttergesteines. Die sapropelische ("marine") Kennlinie hat sich bisher als verläßlich erwiesen und wurde daher von FABER 1987 übernommen.

## 5.2 Bedeutung von $\delta DC1$

In Abb. 6 werden die $\delta DC1$-Werte derselben norddeutschen Gaslagerstätten gegen die effektiven Reifen der darunter lagernden Muttergesteinssektionen aufgetragen. Wie man sieht, wird auch bezogen auf den Wasserstoff das abgespaltene Methan im Laufe der Reifezunahme schwerer, $\delta DC1$ also positiver. Das stimmt überein mit Pyrolyseversuchen von CHUNG 1976 und SACKETT 1978. Wie man ferner sieht, reagiert das Isotopenverhältnis des Wasserstoffs im niedrigeren Reifebereich empfindlicher gegenüber Faziesänderungen als das Isotopenverhältnis des Kohlenstoffs, und ist für sapropelisches Muttergestein sogar positiver als für humisches Muttergestein. Diese Unterschiede im Verhalten von $\delta DC1$ gegenüber $\delta 13C1$ deuten sich schon bei den Korrelationen von SCHOELL 1984 a an.

Bei Muttergesteinsreifen von über 1,5% Ro gibt es kaum noch eine D/H-Fraktionierung mit Reife- oder Faziesänderung. Aus dem Pyrolyseversuch von CHUNG & SACKETT 1979, wie in Kap. 5.1 beschrieben, werden auch hier die entsprechenden Meßwerte auf differentielles sampling umgerechnet, und in Abb. 6 eingetragen. Auch sie stimmen gut mit dem Verlauf der zugehörigen Fazieskennlinie aus case histories überein.

## 6. Bedeutung des Gaspotentials der Kohlenwasserstoffquelle im Untergrund

Der in Gleichung (25) im Zähler stehende Term, ausgenommen $\cap$, $\pi$ und q10°C, beschreibt das Gaspotential einer Kohlenwasserstoffquelle (Muttergestein, Lagerstätte) im Untergrund. Dabei kann das Gaspotential ausgedrückt werden als:

$$\text{Potential } [\frac{cm^3 \; CH4}{cm^3 Muttergestein \; x \; t}] = \frac{delta \; G \; x \; TOC \; x \; \Gamma}{t} \quad (32)$$

oder

$$\text{Potential } [\frac{m^3 \; CH4}{m^2 \; Oberfläche \; x \; t}] = \frac{delta \; G \; x \; TOC \; x \; \Gamma \; x \; h1}{t} \quad (33)$$

Im allgemeinen wird das Ergebnis vorliegend als Version (33) ausgegeben, da auch Ergebnisse über KW-Potentiale aus anderen in der organischen Geochemie üblichen Berechnungsverfahren, wie z.B. das Muttergesteinsmodeling mit reaktionskinetischem Ansatz, in Volumeneinheit Kohlenwasserstoffe pro Muttergesteinsoberfläche angegeben werden.

Der Parameter t [Jahre] ist die Zeitspanne, die für die Migration zur Verfügung steht. Wenn das beprobte Oberflächensediment jung ist, dann kann die Zeit der Migration in das Sediment hinein kleiner werden als die Zeitspanne der Gasabspaltung aus dem Muttergestein. In solchen Fällen ist t das Sedimentalter. Das bedeutet, daß nur soviel von der Kohlenwasserstoffgeschichte des Untergrundes aufgezeichnet wird, wie dem Sedimentalter enspricht. Das ist eine generelle Randbedingung für oberflächengeochemische surveys.

Der direkte Schluß vom ausgegebenen Gaspotential auf das Lagerstätten- oder Muttergesteinspotential im Untergrund ist nur bei Gaslagerstätten oder vorwiegend Gas abspaltendem Muttergestein möglich. Zum Rückschluß auf das Potenial von Öllagerstätten oder vorwiegend Öl abspaltenden Muttergesteinen ist das angezeigte Gaspotential relativ zu gering, da ja nur der Gasanteil angezeigt wird. Die Gasanzeige muß also zur Ermittlung des Ölpotentials wie folgt korrigiert werden:

$$\text{Ölpotential } = \frac{Gaspotential \; x \; 100}{Gasanteil \; der \; Quelle \; [\%]} - Gaspotential \quad (34)$$

## 7. Anwendungsmöglichkeiten unter verschiedenen geologischen Bedingungen

Wie oben gezeigt wurde, sind die erfindungsgemäß gemessenen Oberflächendaten isotopischer und molekularer Natur nur dann bezüglich der geologischen Zustände im Untergrund interpretierbar, wenn bei der Informationsübertragung durch den Wasserfluß ein stationärer Zustand erreicht ist. Dabei entspricht die Genauigkeit der absoluten Aussagen der Genauigkeit der Quantifizierung des die Informationen übertragenden Wasserflusses. Im allgemeinen Fall wird dieser entsprechend dem DARCY'schen Gesetz dem regionalen überhydrostatischen Druckgradienten proportional sein (s. Gl. 22).

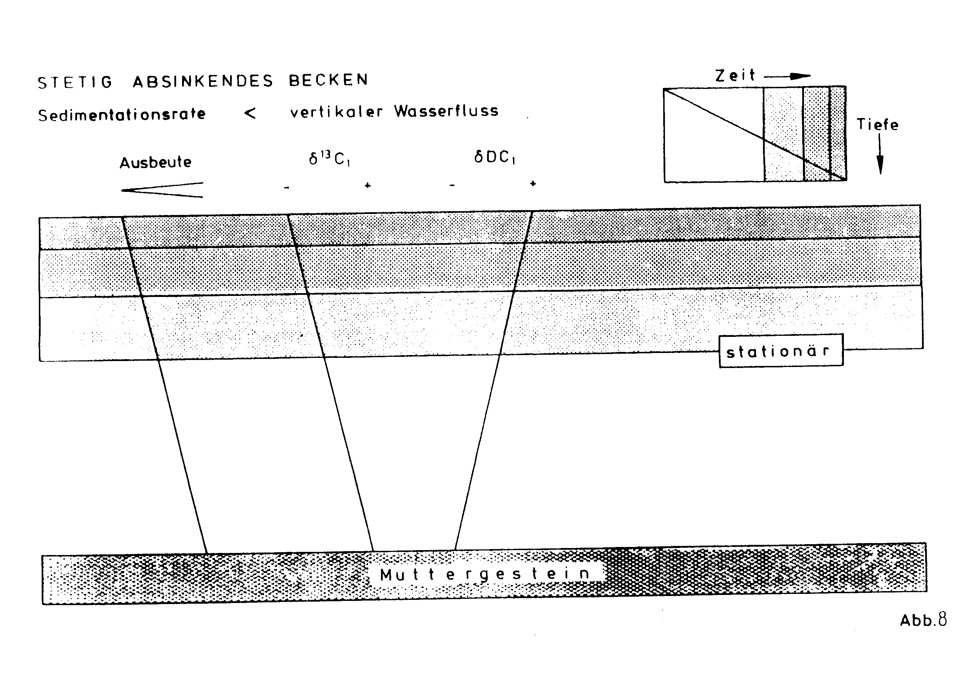

Übertragen in geologische Varianten von Sedimentbecken bedeutet das, daß stets eine Oberflächenschicht beprobt werden sollte, die unter den Bedingungen eines stetig absinkenden Beckens abgelagert wurde. In jedem Fall muß gegeben sein, daß die Geschwindigkeit des aufwärtsgerichteten Kompaktions- oder sonstigen Wasserstromes größer ist als die Sedimentationsrate (Abb. 8).

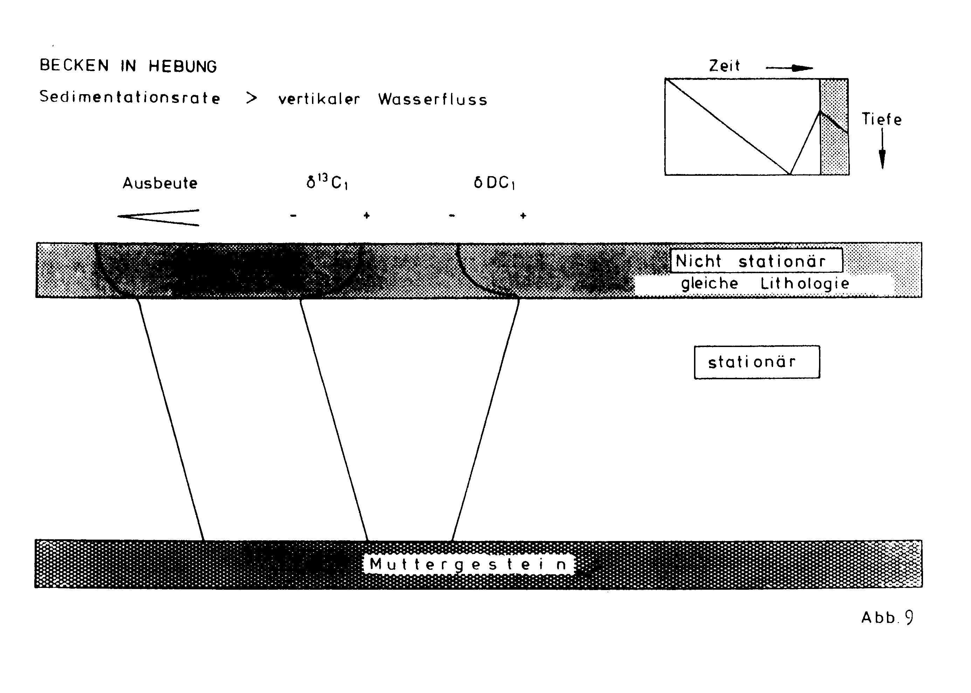

Es kommt jedoch vor - z.B. in Gebieten pleistozäner Vereisung -, daß subrezent in Hebung oder Inversion und Abtragung befindliche Sedimentbecken mit reduziertem aufwärts gerichtetem Wasserfluß von jungen Sedimenten überlagert werden, die dann entweder kein oder ein vorstationäres Gasprofil zeigen (Abb. 9). In solchen Fällen hat es nur Sinn, eventuell vorhandene Ausbisse älterer Schichten zu beproben, deren Ablagerung in die Zeit kontinuierlicher Beckenabsenkung fällt.

In junger Zeit gehobene Becken, in denen tiefere Schichten durch Erosion freigelegt sind, können jedoch die Möglichkeit bieten, Lagerstätten direkt nachzuweisen:

Da durch längeres Aussetzen der aktiven Gasabspaltung aus dem Muttergestein die aus diesem stammende Gassignatur an der Oberfläche nur schwach sein dürfte, ist eine eventuell erhalten gebliebene Lagerstätte über die gesamte Zeit hinweg ein Lieferant für Gase zur Oberfläche hin. Das Produkt aus Gasangebot und Zeit sollte also über einer Lagerstätte größer sein als neben der Lagerstätte.

## 8. Mögliche Störfaktoren

Ein möglicher Störfaktor beruht auf der oberflächennahen Veränderung der isotopischen und molekularen Zusammensetzung von adsorbiertem Methan durch den Angriff von Bakterien. Theoretisch soll bakterielle Oxidation an auch bakteriell gebildetem Methan ansetzen. Da letzteres sich vorwiegend im freien Porenraum aufhält (s. Kap. 1), wird dies erfindungsgemäß durch die Messung von adsorbierten Gasen weitgehend ausgeschaltet. Trozdem wird auch in adsorbierten Gasen gelegentlich bakterielle Oxidation beobachtet. Die Kennzeichen bakteriell oxidierter Gase sind folgende:

1. Besonders positiver $\delta 13 C1$-Wert (ca. -20 bis -30‰), negativerer $\delta DC1$-Wert
2. Hoher Gehalt an ungesättigten Kohlenwasserstoffen (Ethen, relativ zu Methan), was die bakterielle Oxidation als relativ schnell ablaufenden Prozeß charakterisiert.
3. Relativ hoher C2+-Anteil im Gas, da die bakterielle Umwandlung von Kohlenwasserstoffen zu $CO_2$ zunächst beim Methan ansetzt.
4. Strikte Korrelation mit dem Sandgehalt $>63\mu m/<63\mu m$ der Gesamtprobe.

Alle vier Kennzeichen verstärken sich zusammen mit abnehmender Methanausbeute mit dem Grad der bakteriellen Oxidation.

Die wichtigste chemische Bedingung, unter der bakterielle Oxidation im Sediment erfolgt, ist ein hohes Sauerstoffangebot. Das kann gegeben sein entweder durch Luft bei Probennahme über dem Grundwasserspiegel oder durch anorganisch gebundenen Sauerstoff wie z.B. in Rotsedimenten. Erfahrungsgemäß sollte daher die Probennahme unter dem Grundwasserspiegel erfolgen, bei Rotsedimenten ist oft eine noch größere Tiefe erforderlich, über die dann ein tieferes Vorprofil entscheiden kann.

Bei der Durchführung eines surveys kann nach Erfahrungen mit dem Verfahren bakterielle Oxidation folgendermaßen erkannt werden:

1. Bedingung: Das Gas ist nasser als dem Muttergestein entspricht.
2. Bedingung: Das Verhältnis Methanausbeute/Ethenausbeute ist < etwa 200.
Beide Bedingungen müssen erfüllt sein.

Unterscheidungsmerkmale zwischen bakteriell oxidiertem Gas und dem isotopisch und ausbeutemäßig ähnlich aussehenden abiogenen "Hintergrund" (siehe Kap. 1) sind:
- Die obigen zwei Bedingungen gelten auch für Hintergrund.
- Es sind von survey zu survey Schwellenwerte für die absoluten Ausbeuten von Methan und Ethen festlegbar, oberhalb derer bakterielle Oxidation, unterhalb derer Hintergrund vorliegt.

Eine weitere Störung der molekularen und isotopischen Zusammensetzung von adsorbiertem Gas kann durch beim Bohrvorgang künstlich erzeugte Gase entstehen (FABER 1988). Diese werden bei höherer Temperaturbelastung von Meißel und Sediment generiert, und glegentlich beim Rotary-Bohren in Festgestein, aber auch beim Rammkernsonden-Verfahren in schwer zu bohrendem Kies beobachtet.

Zunächst werden ungesättigte Kohlenwasserstoffe generiert (höherer Ethenanteil), zugleich verändern sich die Isotopenverhältnisse. Am sensibelsten reagiert $\delta DC_1$, und zwar zum negativen hin (negativer als -300 ‰), $\delta^{13}C_1$ zum positiveren. Bei noch höherer Temperaturbelastung können sich auch gesättigte Kohlenwasserstoffe bilden.

## 9. Benötigte Standards in Probennahme und Analytik

Die Bohrungen zur Probennahme werden geeigneterweise in weichen Sedimenten mit einer motorgetriebenen Rammkernsonde, in verfestigten Sedimenten durch Rotary-Bohren mit Wasserspülung durchgeführt. Die Probennahme sollte zur Vermeidung bakterieller Oxidation unter dem Grundwasserspiegel erfolgen, was für mitteleuropäisches Flachland eine Tiefe von ca. 1 bis 6m, im Mittel 3m bedeutet. Offshore kann die Probennahme mit einem Kastenlot erfolgen. Die Probe wird für den Transport und bis zur Entgasung zur Vermeidung sekundärer Veränderungen in flüssigem Stickstoff eingefroren. Bei einem bisher noch nicht beprobten Sediment wird von der Probe Material zur ingenieurgeologischen Bestimmung der in-situ-Permeabilität K abgezweigt.

In Vorbereitung zur Analyse wird die Fraktion >63μm abgesiebt. Aus der Feinfraktion <63μm werden die adsorbierten Gase durch Säureaufschluß freigesetzt. Die Bestimmung der molekularen Gaszusammensetzung und -menge erfolgt im Tieftemperatur-Gaschromatographen. Das Ergebnis wird ausgedrückt in Gramm Gasmenge pro Gramm Probe in [ppb]. Die für die 13C/12C- bzw. D/H-Bestimmung vorgesehenen Gaskomponenten werden aus dem Trägergasstrom abgezweigt.

Die Analyse der stabilen Isotope 13C/12C und D/H erfolgt im Massenspektrometer, möglichst geeignet für sehr kleine Gasmengen. Die Kalibrierung des Meßsystems geschieht gegen die üblichen PDB ($\delta$13C1) bzw. SMOW ($\delta$DC1) Standards.

## 10. Verfahrensbeschreibung

Das erfindungsgemäße Verfahren soll nachfolgend anhand eines Beispiels genauer beschrieben werden.

## Verfahren nach Anspruch 1:

Nach Gleichung (16) werden für verschiedene Werte von A Datenpaare $x_{sn}$/F13C1 und $x_{sn}$/FDC$_1$ berechnet und in Abb. 2 und 3 graphisch dargestellt.

An der Erdoberfläche werden mit Hilfe einer motorgetriebenen Rammkernsonde, am Meeresboden mit Hilfe eines Kastenlots, möglichst tonige Sedimentproben aus Tiefen entnommen, in denen keine oxidierenden Verhältnisse mehr herrschen. Onshore bedeutet, aus Tiefen unter dem Grundwasserspiegel, d.h. für Mitteleuropa 3-5m. Bei Rotsedimenten sind zur Vermeidung bakterieller Oxidation i.A. größere Tiefen, d.h. reduzierende Bedingungen erforderlich. Es werden ca. 300 bis 500 g Probensubstanz für die Vermessung der adsorbierten Gase, und ca. dieselbe Menge für die Messung petrophysikalischer Parameter entnommen.

Die für die Entgasung vorgesehene Probe wird zum Transport ins Labor bei -196°C in flüssigem Stickstoff gelagert, um sekundäre Veränderungen zu verhindern. Zur Aussonderung von aufgrund von bakterieller Fermentation in situ entstandenen Gasen sowie von anders fraktionierenden freien thermokatalytischen Gasen wird das Gas im freien Porenraum durch Abtrennung der Grobfraktion >63 μm entfernt. Dies geschieht durch Sieben, Waschen und Auszentrifugieren. Die Fraktion <63 μm wird in einem Glaskolben eingewogen und durch Säureaufschluß im Vakuum werden die an diese Fraktion adsorptiv gebundenen Gase gewonnen.

Die Bestimmung der Gaszusammensetzung und Gasmenge erfolgt im Tieftemperatur-Gaschromatographen. Die Gaszusammensetzung wird in % der gasförmigen Kohlenwasserstoffe im Bereich C1 bis C6 angegeben. Die Gasmenge wird als g Gas pro g Probe in ppb angegeben.

Die Analyse der stabilen Isotope 13C/12C und D/H für Methan wird an einem Massenspektrometer durchgeführt, das zur Analyse sehr kleiner $CO_2$-Gasmengen bis 1 μl $CO_2$ und 200 μl $H_2$ unter Normalbedingungen geeignet ist. Die Kohlenstoff-Isotopenverhältnisse werden gegen den PDB-Standard, die Wasserstoff-Isotopenverhältnisse gegen den SMOW-Standard berechnet.

Die Messung der petrophysikalischen Parameter Porosität $\phi$ und Permeabilität K erfolgt im Lockersediment-Labor. Die Permeabilität K der Gesamtprobe wird zur Rekonstruktion des ursprünglichen Sedimentzusammenhaltes bei drei unterschiedlichen Lagerungsdichten bestimmt.

T ist die mittlere Jahrestemperatur in der beprobten Tiefe, und die Adsorptivität q10°C Methan an Ton sowie die dynamische Viskosität μ des Wassers als Funktion von T sind bekannte Größen.

Es ist eine unbedingte Voraussetzung für die Probennahme und damit für die Planung eines surveys, daß das beprobte Oberflächensediment ein Gas-Konzentrationsprofil enthält, das aufgrund eines stationären vertikalen Gas-Wasserflusses zustandegekommen ist. In geologische Kategorien übersetzt bedeutet das, für den gesamten Schichtstapel zwischen Kohlenwasserstoffquelle und Oberfläche muß gelten: vertikaler Wasserfluß >Sedimentationsrate. Diese Bedingung ist i.A. in stetig absinkenden Sedimentbecken erfüllt, nicht jedoch in einigen Becken, die in junger Hebung begriffen und mit glazialen Sedimenten bedeckt sind. Wie im letzteren Fall ist es stets nötig, so alte Sedimente - dort, wo sie unter jüngerer Bedeckung ausbeißen - zu beproben, daß o.g. Bedingung erfüllt ist.

Es wird ein semilogarithmisches Koordinatensystem erstellt, das dem der Beziehung zwischen A, xsn und F in Abb. 2 und 3 insofern entspricht, als die Abzisse xsn dieselbe ist, auf der Ordinate statt F = delta $\delta$13C1 bzw. delta $\delta$DC1 die gemessenen Isotopenverhältnisse $\delta$13C1 bzw. $\delta$DC1 mit demselben Achsenabschnitt für -1‰ bzw. +20‰ wie bei F aufgetragen werden (Untergraphik Abb. 10 in der Abb. 2). Das von der Ordinate repräsentierte Intervall wird so gewählt, daß die Variation der gemessenen $\delta$-Werte (von -44‰ bis -47‰ in

Abb. 1 überstrichen wird.

In dieses Kordinatensystem werden die gemessenen Datenpaare xsn/$\delta$13C1 bzw. xsn/$\delta$DC1 für Gase eines surveys, danach ausgewählt, daß sie aus der gleichen Muttergesteinsquelle stammen und sich in Oberflächensedimenten mit gleichen petrophysikalischen Parametern befinden, eingetragen. Sie reihen sich in einer Funktion auf, die im semilogarithmischen Maßstab eine Gerade ergibt.

Die erstellte Graphik mit den Meßpunkten wird über die Vergleichsgraphik gemäß Abb. 2 gelegt und unter Übereinstimmung der Abszisseneinteilung nur in Richtung der Ordinate soweit verschoben, bis die aus den Meßpunkten resultierende Gerade in ihrer Steigung mit einem Abschnitt der für verschiedene Faktoren A lückenlos berechneten Geradenschar der vergleichsgraphik übereinstimmt. Der so identifizierte Faktor A (A= 0,3 in Abb. 2) ist der für die aufgetragenen Meßpunkte gültige.

Das Gaspotential im Untergrund an der Stelle der erbohrten Probe errechnet sich nach folgender aus Gl. 2 durch Umformung erhaltene Gleichung

$$\text{Gaspotential} \; = \; \frac{A \times \sqrt{T}[(\Phi \times h_2) \; + \; (\frac{i \times (\sqrt{(K_0^2 + K^2)} \; - \; K_0) \times 3{,}1 \times 10^2 \times t}{\mu})]}{\cap \times \pi \times q_{10°\,C}}$$

unter zusätzlicher Verwendung der Entfernung ($h_2$) zwischen Muttergestein oder Lagerstätte und Oberfläche, des lokalen aufwärtsgerichteten überhydrostatischen Druckgradienten i, und unter Bezug auf ein geologisches Zeitintervall t (Jahre).

**Verfahren nach Anspruch 2:**

Es werden für eine bestimmte Fazies für kleine Intervalle zunehmender Reife die zugehörigen Werte originales $\delta$13C1o aus Abb. 6 und originales $\delta$DC1o aus Abb. 7 in ein Diagramm mit den Achseneinteilungen $\delta$13C1 und $\delta$DC1 (Abb. 4) aufgetragen. Dies ergibt eine Linie, auf der die Reifeschritte markiert werden. Der Vorgang wird für die übrigen Fazien wiederholt, und die Markierungen gleicher Reife zwischen den Fazieslinien werden miteinander verbunden.

Aus Gleichung (3) werden unter Einsetzen der ermittelten Fraktionierungsfaktoren $\delta$13C1/12C1 = 1,0014493 und $\delta$DC1/HC1 = 0,9752528 für verschiedene Werte von A und der Methanausbeute xsn die zugehörigen Isotopenverhältnisdifferenzen F13C1 und FDC1 ausgerechnet. Wertepaare F13C1/FDC1 für bestimmte Werte für A und xsn werden in dem Diagramm, ausgehend von den verschiedenen originalen Isotopenverhältnispaaren $\delta$13C1o/$\delta$DC1o für verschiedene Fazien und Reifen, abgetragen und mit den Ausgangspunkten durch Geraden verbunden. Es ergibt sich auf diese Weise eine parallele Geradenschar, da die Relation der beiden F-Werte zueinander für verschiedene A und xsn konstant bleibt. Das heißt, der Wert von F - und damit der Grad der isotopischen Veränderung, ausgehend von einem orginalen Wert - ist ausschließlich abhängig von A und xsn (s. Gleichung (3). Im Diagramm bedeutet das, eine bestimmte Distanz entlang der Geradenschar entspricht bestimmten Kombinationen von A und xsn, was in der Untergraphik Abb. 11 des Diagramms Abb. 4 dargestellt ist.

Ein gemessenes Isotopenpaar $\delta$13C1/$\delta$DC1 wird in das Diagramm Abb. 4 als Punkt X eingetragen. Der Punkt liegt auf einer bestimmten Geraden der Geradenschar. Diese Gerade schneidet die Spuren möglicher originaler $\delta$-Paare und damit die Spuren der vier verschiedenen Fazien in vier Punkten M, S, G und H, die außerdem an verschiedenen Stellen der Kurvenschar unterschiedlicher Reife liegen.

Für das gemessene Isotopenpaar X ergeben sich also vier verschiedene Optionen zur Charakterisierung des verantwortlichen Muttergesteins: M = sapropelisch mit der Reife 1,0%, S = Mischmuttergestein mit der Reife 1,06%, G = sapropelische Kohle mit der Reife 1,18%, H = humische Kohle mit der Reife 1,18%.

Zur Festlegung einer bestimmten Option aus diesen vier Möglichkeiten benötigt man die Kenntnis der Distanz, über die die isotopische Veränderung ausgehend vom Meßpunkt X entlang der Geraden zurückgewickelt werden muß. Diese Distanz wird bestimmt durch die Werte von Faktor A und der Methanausbeute xsn, wie in der Untergraphik Abb. 11 in der Abb. 4 dargestellt ist. Sei der in Anspruch 1 ermittelte Faktor A = 0,01 und die Methanausbeute xsn = 2000 ppb, so ergibt sich daraus in der Untergraphik Punkt U mit einer Distanz vom Ursprung von 3,4 cm.

Diese Distanz wird, ausgehend vom Meßpunkt X, entlang der Geraden in Richtung auf die Muttergesteinsspuren abgetragen, und man gelangt zu Punkt S, d.h. das für das gemessene Datenpaar x verantwortliche Muttergestein ist ein Mischmuttergestein der Reife Ro = 1,06%.

Über bekannte Zusammenhänge zwischen organischer Fazies und Reife eines Muttergesteins und dem relativen Gas-/Ölanteil seiner Spaltprodukte andererseits wird letzterer Anteil auf der Basis der oben beschriebenen Muttergesteinscharakterisierung abgeschätzt.

Dieser Gas-/Ölanteil wird in Form von "Gasanteil der Quelle [%]" in Gleichung (5) eingetragen und so aus

13

dieser und dem in Anspruch 1 ermittelten Gaspotential das Ölpotential des Untergrundes an derselben Stelle festgestellt.

Literatur

ADAMSON, A. W., 1967. Physical chemistry of surfaces: Interscience Publishers New York, London, Sydney.

CHUNG, H. M., 1976, Isotope fractionation during the maturation of organic matter: Ph. D. Thesis, College Station, Texas A + M University.

CHUNG, H. M., SACKETT, W. M., 1979, Use of stable carbon isotope compositions of pyrolytically derived methane as maturity indices for carbonaceous materials: Geochimica et Cosmochimica Acta, vol. 43, p. 1979 - 1988.

CLAYTON, C., 1991, Carbon isotope fractionation during natural gas generation from kerogen: Marine and Petroleum Geology, vol. 8, no. 2, p. 232 - 240.

CRAIG, H., HORIBE, Y., SOWERS, T., 1988, Gravitational Separation of Gases and Isotopes in Polar Ice Caps: Science, vol. 242, p. 1675 - 1678.

FABER, E., 1987, Zur Isotopengeochemie gasförmiger Kohlenwasserstoffe: Erdöl - Erdgas - Kohle, vol. 103, no. 5, p. 210 - 218.

FABER, E., SCHMITT, M., STAHL, W. J., 1979, Geochemische Daten nordwestdeutscher Oberkarbon- , Zechstein- und Buntsandsteingase - migrations- und reifebedingte Änderungen: Erdöl und Kohle - Erdgas - Petrochemie, vol. 32, no. 2, p. 65 - 70.

FABER, E., STAHL, W. J., 1984, Geochemical Surface Exploration for Hydrocarbons in North Sea: AAPG Bull., vol. 68, no. 3, p. 363 - 386.

FUEX, A. N., 1980, Experimental evidence against an appreciable isotopic fractionation of methane during migration: Advances in Organic Geochemistry 1979 (Douglas, A. G. and Maxwell, J. R., Eds.), p. 725 - 732.

GABENER, H. G., 1983, Untersuchungen über die Anfangsgradienten und Filtergesetze bei bindigen Böden: Mitteilungen aus dem Fachgebiet Grundbau und Bodenmechanik Univ. Essen, vol. 6.

GANT, P. L., YANG, K., 1964, Chromatographic separation of isotopic methanes: J. Am. Chem. Soc., vol. 86, p. 5063 - 5064.

GUNTER, B. D., GLEASON, J. D., 1971, Isotope fractionation during gas chromatographic separations: J. of Chromatographic Science, vol. 9, p. 191 - 192.

HEWEL-BUNDERMANN, H., JUNTGEN, H., 1988, Porengefüge und Wasseraufnahmekapazität von Steinkohle: Erdöl - Erdgas - Kohle, vol. 104, no. 3, p. 124 - 130.

JUNTGEN, H., KARWEIL, J., 1966, Gasbildung und Gasspeicherung in Steinkohleflözen: Erdöl und Kohle - Erdgas - Petrochemie, vol. 19, no. 4, p. 251 -258, no. 5, p. 339 - 344.

JUNTGEN, H., KLEIN, J., 1975, Entstehung von Erdgas aus kohligen Sedimenten: Erdöl und Kohle - Erdgas - Petrochemie, vol. 28, no. 2, p. 65 - 73.

KETTEL, D., 1989, Upper Carboniferous source rocks north and south of the Variscan Front (NW and Central Europe): Marine and Petroleum Geology, vol. 6, no. 2, p. 170 - 181.

KLEIN, J., LÖCKEN, K., 1986, Einfluss des geothermischen Gradienten auf Inkohlungsrechnungen nach einem reaktionskinetischen Modell: Erdöl - Erdgas - Kohle, vol. 102, no. 4, p. 206 - 210.

KROOSS, B. M., LEYTHAEUSER, D., 1988, Experimental measurements of the diffusion parameters of light hydrocarbons in water-saturated sedimentary rocks - 2. Results and geochemical significance: Organic Geochemistry, vol. 12, no. 2, p. 91 - 108.

LANDOLT - BÖRNSTEIN, 1956, Zahlenwerte und Funktionen aus Physik, Chemie etc., Band 2, 3. Teil: Springer-Verlag Berlin, Göttingen, Heidelberg.

LOMMERZHEIM, A., 1988, Die Genese und Migration von Kohlenwasserstoffen im Münsterländer Becken: Dissertation, Universität Münster.

MAGARA, K., 1975, Importance of Aquathermal Pressuring Effect in Gulf Coast: AAPG Bull., vol. 59, no. 10, p. 2037 - 2045.

MAGARA, K., 1987, Fluid flow due to sediment loading - an application to the Arabian Gulf region: Fluid Flow in Sedimentary Basins and Aquifers, Goff, J. C. and Williams, B. P. J. (Eds.), Geological Society London Special Publication no. 34, p. 19 - 28.

MATTHESS, G., 1973, Lehrbuch der Hydrogeologie, Band 2: Borntraeger Berlin, Stuttgart.

McAULIFFE, C., 1966, Solubility in water of paraffin, cycloparaffin, olefin, acetylene, cycloolefin and aromatic hydrocarbons: J. Phys. Chem., vol. 70, p. 1267 - 1275.

MOISIO THOMAS, M., 1989, Comments on Calculation of Diffusion Coefficients from Hydrocarbon Concentration Profiles in Rocks: AAPG Bull., vol. 73, no. 6, p. 787 - 791.

REDDING, C. E., SCHOELL, M., MONIN, J. C., DURAND, B., 1980, Hydrogen and Carbon isotopic composition of coals and kerogens: Advances in Organic Geochemistry 1979 (Douglas, A. G. and Maxwell, J. R., Eds.), p. 711 - 723.

ROHRBACK, B. G., PETERS, K. E., KAPLAN, I. R., 1984, Geochemistry of Artificially Heated Humic and Sapropelic Sediments - part 2 Oil and Gas Generation: AAPG Bull., vol. 68, no. 8, p. 961 - 970.

SACKETT, W. M., 1978, Carbon and hydrogen isotope effects during the thermocatalytic production of hydrocarbons in laboratory simulation experiments: Geochimica et Cosmochimica Acta, vol. 42, p. 571 - 580.

SAHORES, J. J., WITHERSPOON, P. A., 1970, Diffusion of light paraffin hydrocarbons in water from 2° C to 80° C: Advances in Organic Geochemistry 1966 (Hobson, G. D. and Speers G. C. Eds.), p. 219 - 230.

SCHOELL, M., 1984 a, Stable Isotopes in Petroleum Research: Advances in Petroleum Geochemistry London (Brooks, J. and Welte, D. Eds.), p. 215 - 245.

SCHOELL, M., 1984 b, Wasserstoff- und Kohlenstoffisotope in organischen Substanzen, Erdölen und Erdgasen: Geologisches Jahrbuch, D, vol. 67, p. 3 - 161.

SLUIJK, D., NEDERLOF, M. H., 1984, Worldwide geological experience as a systematic basis for prospect appraisal: Petroleum Geochemistry and Basin Evaluation, AAPG Memoir 35, p. 15 - 26.

STAHL, W. J., KELCH H. J., GERLING, P., FABER, E., 1984, Gasförmige Kohlenwasserstoffe in Oberflächensedimenten des Elm: Geologisches Jahrbuch, A, vol. 75, p. 501 - 524.

WELTE, D. H., SCHAEFER, R. G., STOESSINGER, W., RADKE, M., 1984, Gas Generation and Migration in the Deep Basin of Western Canada: AAPG Memoir 38, p. 35 - 47.

**Patentansprüche**

1. Verfahren zum Nachweis des Erdgaspotentials und seiner Veränderung in Sedimentbecken durch Spurengasmessungen von Methan an der Oberfläche oder an der Meeresbodenoberfläche, bei dem

a) an der Oberfläche die an der Feinfraktion < 63 μm adsorbierten Methane nach ihrer Konzentration $x_{sn}$ und die zugehörigen Isotopenverhältnisse $\delta 13C1$ und $\delta DC1$ gemessen werden,

**gekennzeichnet durch** folgende weitere Verfahrensschritte:

b) Messung der petrophysikalischen Parameter der beprobten Gesamtsedimente 0 und K,

c) Nachweis des Erdgaspotentials unter Benutzung von aufgrund bereits gemessener geochemischer Parameter zuvor ermittelten Fraktionierungsfaktoren $\alpha 13C1/12C1$ zwischen 13C und 12C und $\alpha DC1/HC1$ zwischen D und H, jeweils für den Übergang gelöstes Methan-adsorbiertes Methan nach der Gleichung

$$\ln x_{sn} = -\frac{\ln(\frac{1+A}{A})}{\ln(\frac{1+A}{\alpha+A})} \times \ln(\frac{F+1000}{1000})$$

$$[\ln(1+A) - \ln(\alpha+A)]\ln x_{sn} = -\ln(\frac{1+A}{A}) \times \ln(\frac{F+1000}{1000})$$

$$\ln x_{sn} \times \ln(\alpha+A) = \ln(\frac{1+A}{A}) \times \ln(\frac{F+1000}{1000}) + \ln x_{sn} \times \ln(1+A)$$

$$\ln(\alpha+A) = \frac{1}{\ln x_{sn}} \times \ln(\frac{1+A}{A}) \times \ln(\frac{F+1000}{1000}) + \ln(1+A)$$

$$\alpha + A = (1+A)(\frac{1+A}{A})^{\frac{\ln\frac{F+1000}{1000}}{\ln x_{sn}}}$$

$$\alpha = -A + (1+A)[(\frac{1+A}{A})^{\frac{\ln\frac{F+1000}{1000}}{\ln x_{sn}}}] \quad (1)$$

worin $x_{sn}$ die gemessene Konzentration an adsorbiertem Methan, F das an der Oberfläche gemessene Isotopenverhältnis $\delta 13C1$ minus originales Isotopenverhältnis $\delta 13C1o$ bzw. das an der Oberfläche gemessene Isotopenverhältnis $\delta DC1$ minus originales Isotopenverhältnis $\delta DC1o$ und A ein Faktor ist, der von rein geologischen Faktoren abhängt entsprechend der Gleichung

$$A = \frac{\cap \times \pi \times q_{10°C} \times delta\,G \times TOC \times h_1 \times \Gamma \times 10\,delta\,R_o}{\sqrt{T}\,[(\Phi \times h_2) + (\frac{i \times (\sqrt{(K_0^2 + K^2)} - K_0) \times 3,1 \times 10^2 \times t}{\mu})]} \quad (2)$$

worin

delta G          differentielle Gasgenese (cm³/g TOC x 0,1 % $R_o$)

TOC        organischer Kohlenstoff (%)

$\Gamma$        Muttergesteinsdichte ($g/cm^3$)

$h_1$        Muttergesteinsmächtigkeit ( m)

delta $R_o$        Reifezunahme in der Zeit t (%)

$q_{10°C}$        Adsorptivität Methan/Ton bei 10°C ($cm^3/cm^3$)

$\cap$        Löslichkeit Methan in Wasser bei Oberflächenbedingungen ($cm^3/cm^3$)

$\mu$        dynamische Viskosität des Wassers bei Temperatur T (cp)

K        Permeabilität der Probe (darcy)

0        effektive Porosität der Probe (%)

t        Migrationszeit des Gases (Jahre)

$h_2$        Migrationsdistanz des Gases ( m)

T        Probentemperatur (°C)

$K_o$        Schwellenwert von K für den Übergang Nicht-Linearität des DARCY'schen Gesetzes i        aufwärts gerichteter überhydrostatischer Druckgradient (bar/m) während der Zeit t.

bedeuten,

d) Berechnung von Datenpaaren $x_{sn}$/F13C1 und $x_{sn}$/FDC1 für verschiedene Werte von A unter Verwendung der Gleichung

$$x_{sn} = \exp -[\frac{\ln(\frac{1+A}{A})}{\ln(\frac{1+A}{\alpha+A})} \times \ln(\frac{F+1000}{1000})] \quad (3)$$

und Ablegen der Datenpaare in eine Tabelle oder Darstellung der Datenpaare in einer Graphik jeweils in Abhängigkeit von A;

e) Halblogarithmische Darstellung (log $x_{sn}$ gegen $\delta$13C1 oder $\delta$DC1) der gemessenen Daten der Datenpaare $x_{sn}$/$\delta$13C1 und $x_{sn}$/$\delta$DC1 für Gase aus der gleichen Muttergesteinsquelle und in Oberflächensedimenten mit gleichen petrophysikalischen Parametern in einer Graphik, wobei sich ein linearer Zusammenhang ergibt und Vergleich der Steigung dieser Geraden mit den sich aus der Graphik der Datenpaare $x_{sn}$/F13C1 und $x_{sn}$/FDC1 für verschiedene Werte von A ergebenden Steigungen zur Bestimmung des Faktors A, und

f) Ermittlung des Gaspotentials nach der Gleichung

$$\text{Gaspotential} = \frac{A \times \sqrt{T}[(\Phi \times h_2) + (\frac{i \times (\sqrt{(K_0^2 + K^2)} - K_0) \times 3{,}1 \times 10^2 \times t}{\mu})]}{\cap \times \pi \times q_{10°C}} \quad (4)$$

wobei $\mu$ in Abhängigkeit von T und $q_{10°C}$ bekannt sind.

2.     Verfahren nach Anspruch 1, **dadurch gekennzeichnet,** daß zur Identifizierung des für das gemäß Anspruch 1 nachgewiesene Erdgaspotential verantwortlichen Lagerstätte oder des Muttergesteins nach Reifezustand und organischer Fazies mit dem Ziel der Abschätzung seines Gas-/ölanteils und damit des Ölpotentials aus denselben Spurengasmessungen,

a) die aufgrund bereits gemessener geochemischer Parameter erstellten Beziehungen (Abb. 5 und 6) zwischen Reife und organischer Fazies eines Muttergesteins einerseits mit dem originalen $\delta$13C1$_o$ und $\delta$DC1$_o$ von Lagerstättenmethanen andererseits in einer Graphik kombiniert werden (Abb. 4), in der auf den Achsen $\delta$13C1 und $\delta$DC1 aufgetragen sind,

b) die Relation zwischen den Isotopenverhältnisdifferenzen F13C1 und FDC1, die sich für verschiedene Faktoren A durch Einsetzen der ermittelten Fraktionierungsfaktoren $\delta$13C1/12C1 = 1,0014493 und $\alpha$DC1/HC1 = 0,9752528 aus Anspruch 1 in Gleichung (3) errechnet, als parallele Geradenschar in dieselbe Abb. 4 eingetragen wird, wobei sich die isotopische Veränderung F13C1/FDC1 von originalen Isotopenpaaren $\delta$13C1$_o$/6DC1$_o$ entlang der Geradenschar bewegt über eine Distanz, die vom zugehörigen Faktor A und der gemessenen Methankonzentration xsn bestimmt wird gemäß Gleichung (3) aus Anspruch 1,

c) an der Oberfläche gemessene Isotopenpaare $\delta$13C1/$\delta$DC1 in die Graphik Abb. 4 eingetragen und entlang der Geradenschar über eine von den bekannten Größen A und Methankonzentration xsn bestimmte Distanz zurückbewegt werden zur Bestimmung einer diskreten Kombination von originalem Paar $\delta$13C1$_o$/$\delta$DC1$_o$, also von Reife und Fazies des Muttergesteins und damit des relativen Gas-/ölanteils seines Potentials und

d) aus dem in Anspruch 1 gemäß Gleichung (4) bestimmten Gaspotential der Anteil des Ölpotentials nach der Gleichung

$$\text{Ölpotential} = \frac{\text{Gaspotential x 100}}{\text{Gasanteil der Quelle [\%]}} - \text{Gaspotential} \quad (5)$$

ermittelt wird.

## Claims

1. Method for indication of natural gas potential and its change in sedimentary basins by trace gas measurements of methane on the surface or on the sea bed surface in which

   (a) on the surface are measured methanes, adsorbed on the fine fraction < 63 $\mu$m, according to their concentration $X_{sn}$ and the associated isotope abundance ratios $\delta 13C1$ and $\delta DC1$,

   characterised by the following further method steps:

   (b) measurement of the petrophysical parameters of the tested total sediments $\phi$ and K,

   (c) indication of the natural gas potential using fractionation factors $\alpha 13C1/12C1$ between 13C and 12C and $\alpha DC1/HC1$ between D and H, these factors having been determined on the basis of previously measured geochemical parameters, always for the transition dissolved methane-adsorbed methane according to the equation

   $$\ln x_{sn} = - \frac{\ln(\frac{1+A}{A})}{\ln(\frac{1+A}{\alpha+A})} \times \ln(\frac{F+1000}{1000})$$

   $$[\ln(1+A) - \ln(\alpha+A)]\ln x_{sn} = - \ln(\frac{1+A}{A}) \times \ln(\frac{F+1000}{1000})$$

   $$\ln x_{sn} \times \ln(\alpha+A) = \ln(\frac{1+A}{A}) \times \ln(\frac{F+1000}{1000}) + \ln x_{sn} \times \ln(1+A)$$

   $$\ln(\alpha+A) = \frac{1}{\ln x_{sn}} \times \ln(\frac{1+A}{A}) \times \ln(\frac{F+1000}{1000}) + \ln(1+A)$$

   $$\alpha + A = (1+A)(\frac{1+A}{A})^{\frac{\ln\frac{F+1000}{1000}}{\ln x_{sn}}}$$

   $$\alpha = - A + (1+A)[(\frac{1+A}{A})^{\frac{\ln\frac{F+1000}{1000}}{\ln x_{sn}}}] \quad (1)$$

   where $x_{sn}$ is the measured concentration of adsorbed methane, F is the isotope abundance ratio $\delta 13C1$, measured on the surface, minus the original isotope abundance ratio $\delta 13C1o$ or the isotope abundance ratio $\delta DC1$, measured on the surface, minus the original isotope abundance ratio $\delta DC1o$, and A is a factor depending on purely geological factors according to the equation

   $$A = \frac{\cap \times \pi \times q_{10°C} \times \text{delta G} \times \text{TOC} \times h_1 \times \Gamma \times 10 \text{ delta } R_o}{\sqrt{T}\,[(\Phi \times h_2) + (\frac{i \times (\sqrt{K_0^2 + K^2}\,) - K_0) \times 3,1 \times 10^2 \times t}{\mu})]} \quad (2)$$

   where

   | | |
   |---|---|
   | delta G | is differential gas genesis (cm³/g TOC x 0.1 % $R_o$) |
   | TOC | is organic carbon (%) |
   | $\Gamma$ | is parent rock density (g/cm³) |
   | $h_1$ | is parent rock thickness (m) |
   | delta $R_o$ | is maturity increase in time t (%) |
   | $q_{10°C}$ | is adsorptivity methane/clay at 10 °C (cm³/cm³) |
   | $\cap$ | is solubility of methane in water at surface conditions (cm³/cm³) |
   | $\mu$ | is dynamic viscosity of water at temperature T (cp) |
   | K | is permeability of the sample (darcy) |
   | $\phi$ | is effective porosity of the sample (%) |
   | t | is migration time of the gas (years) |
   | $h_2$ | is migration distance of the gas (m) |
   | T | is temperature of the sample (°C) |
   | $K_o$ | is threshold value of K for the transition non-linearity of Darcy's law |
   | i | is upwards directed superhydrostatic pressure gradient (bar/m) during time t, |

   d) calculation of data pairs $x_{sn}/F13C1$ and $x_{sn}/FDC1$ for various values of A using equation

$$x_{sn} = \exp\ -[\frac{\ln(\frac{1+A}{A})}{\ln(\frac{1+A}{\alpha+A})} \times \ln(\frac{F+1000}{1000})] \quad (3)$$

and setting out the data pairs in a table or representation of the data pairs in a graph always in dependence on A;

(e) semilogarithmic representation (log $X_{sn}$ against $\delta 13C1$ or $\delta DC1$) of the measured data of the data pairs $x_{sn}/\delta 13C1$ and $x_{sn}/\delta DC1$ for gases from the same parent rock source and in surface sediments having the same petrophysical parameters in a graph, while a linear connection is obtained, and comparison of the gradient of this straight line with the gradients following from the graph of the data pairs $x_{sn}/F13C1$ and $x_{sn}/FDC1$ for various values of A for the determination of the factor A, and

(f) determination of the gas potential according to the equation

$$gas\ p. = \frac{A \times \sqrt{T}[(\Phi \times h_2) + (\frac{i \times (\sqrt{(K_0^2 + K^2)} - K_0) \times 3,1 \times 10^2 \times t}{\mu})]}{\cap \times \pi \times q_{10°\ C}} \quad (4)$$

while $\mu$ is known in dependence on T and $q_{10°C}$.

2. Method according to claim 1, characterised in that for the identification of the deposit or the parent rock responsible for the natural gas potential indicated according to claim 1 according to the state of maturity and organic facies with the aim of evaluation of its gas/oil share and therefore of the oil potential from the same trace gas measurements,

(a) the relationships established from the already measured geochemical parameters (Fig. 5 and 6) between maturity and organic facies of a parent rock are combined on the one hand with the original $\delta 13C1_o$ and $\delta DC1_o$ of the deposit methanes and on the other hand in a graph (Fig. 4) in which $\delta 13C1$ and $\delta DC1$ are plotted on the axes,

(b) the relation between the isotope abundance ratio differences F13C1 and FDC1 which is calculated for various factors A by insertion of the determined fractionisation factors $\delta 13C1/12C1 = 1.0014493$ and $\alpha DC1/HC1 = 0.9752528$ from claim 1 in equation (3), is plotted in the same Fig. 4 as parallel system of straight lines, while the isotopic change F13C1/FDC1 of the original isotope pairs $\delta 13C1_o/\delta GCl_o$ moves along the system of straight lines over a distance which is determined by the associated factor A and the measured methane concentration xsn according to equation (3) from claim 1,

(c) isotope pairs $\delta 13C1/\delta D$, measured on the surface, are plotted into the graph in Fig. 4 and moved back along the system of straight lines through a distance determined by the known quantities A and methane concentration xsn for the determination of a discrete combination of the original pair $\delta 13C1_o/\delta DC1_o$, i.e. from maturity and facies of the parent rock and therefore the relative gas/oil share of its potential and

(d) from the gas potential, determined in claim 1 according to the equation (4), is determined the share of the oil potential according to the equation

$$oil\ potential = \frac{gas\ potential\ \times\ 100}{gas\ share\ of\ source\ [\%]} - gas\ potential \quad (5)$$

**Revendications**

1. Procédé pour déceler le potentiel de gaz naturel et sa modification dans des bassins sédimentaires par mesures de gaz-trace de méthane à la surface ou à la surface de fonds marins, dans lequel

a) on mesure par leur concentration $x_n$ les méthanes adsorbés à la surface par la fraction fine < 63 µm et les proportions d'isotopes $\delta 13C1$ et $\delta DC1$ adjointes, caractérisé par les étapes procédurales supplémentaires suivantes :

b) mesure des paramètres pétrophysiques des sédiments totaux $\phi$ et K,

c) décèlement du potentiel de gaz naturel par utilisation de facteurs de fractionnement, sur la base de paramètres géochimiques déjà mesurés déterminés avant, $\alpha 13C1/12C1$ entre 13C et 12C et $\alpha DC1/HC1$ entre D et H, respectivement pour la transition méthane dissous-méthane adsorbé selon l'équation.

$$\ln x_{sn} = -\frac{\ln(\frac{1+A}{A})}{\ln(\frac{1+A}{\alpha+A})} \times \ln(\frac{F+1000}{1000})$$

$$[\ln(1+A) - \ln(\alpha + A)]\ln x_{sn} = -\ln(\frac{1+A}{A}) \times \ln(\frac{F+1000}{1000})$$

$$\ln x_{sn} \times \ln(\alpha + A) = \ln(\frac{1+A}{A}) \times \ln(\frac{F+1000}{1000}) + \ln x_{sn} \times \ln(1+A)$$

$$\ln(\alpha + A) = \frac{1}{\ln x_{sn}} \times \ln(\frac{1+A}{A}) \times \ln(\frac{F+1000}{1000}) + \ln(1+A)$$

$$\alpha + A = (1+A)(\frac{1+A}{A})^{\frac{\ln\frac{F+1000}{1000}}{\ln x_{sn}}}$$

$$\alpha = -A + (1+A)[(\frac{1+A}{A})^{\frac{\ln\frac{F+1000}{1000}}{\ln x_{sn}}}] \quad (1)$$

dans laquelle $x_n$ représente la concentration mesurée pour le méthane adsorbé, F la proportion d'isotopes $\delta 13C1$ mesurée à la surface moins la proportion d'isotopes $\delta 13C1o$ d'origine ou respectivement la proportion d'isotopes $\delta DC1$ mesurée à la surface moins la proportion d'isotopes $\delta DC1o$ d'origine et A est un facteur qui dépend de facteurs purement géologiques correspondant à l'équation

$$A = \frac{\cap \times \pi \times q_{10°C} \times delta\ G \times TOC \times h_1 \times \Gamma \times 10\ delta\ R_o}{\sqrt{T}[(\Phi \times h_2) + (\frac{i \times (\sqrt{(K_0^2 + K^2)} - K_0) \times 3,1 \times 10^2 \times t}{\mu})]} \quad (2)$$

dans laquelle

delta G      représente la genèse de gaz différentielle (cm³/g TOC x 0,1% Ro)
TOC      le carbone organique (%)
$\Gamma$      la densité de la roche-mère (g/cm³)
$h_1$      l'épaisseur de couche de la roche-mère (m)
delta Ro      l'augmentation de maturation dans le temps t (%)
$q_{10-c}$      l'adsorbivité méthane/argile à 10°C (cm³/cm³)
$\cap$      la solubilité du méthane dans l'eau dans des conditions de surface (cm³/cm³)
$\mu$      la viscosité dynamique de l'eau à la température T (cp)
K      la perméabilité de l'échantillon (darcy)
$\phi$      la porosité effective de l'échantillon (%)
t      le temps de migration du gaz (années)
$h_2$      la distance de migration du gaz (m)
T      la température de l'échantillon (°C)
$K_o$      la valeur seuil de K pour la transition de non linéarité de la loi de DARCY du gradient de pression surhydrostatique (bar/m) dirigé vers le haut pendant le temps t,

d) calcul de paires de données $x_n/F13C1$ et $x_n//FDC1$ pour diverses valeurs de A en utilisant l'équation

$$x_{sn} = \exp -[\frac{\ln(\frac{1+A}{A})}{\ln(\frac{1+A}{\alpha+A})} \times \ln(\frac{F+1000}{1000})] \quad (3)$$

et classement des paires de données dans un tableau ou représentation des paires de données dans un graphique respectivement en fonction de A ;

e) représentation semi-logarithmique (log $x_n$ en comparaison de $\delta 13C1$ ou $\delta DC1$) des données mesurées des paires de données $X_n/\delta 13C1$ et $x_n/\delta DC1$ pour des gaz provenant de la même source de roche-mère et dans des sédiments superficiels avec les mêmes paramètres pétrophysiques dans un graphique, une corrélation linéaire s'ensuivant, et comparaison de la pente ascendante de ces droites avec les pentes ascendantes résultant du graphique des paires de données $x_n/F13C1$ et $x_n/FDC1$ pour diverses valeurs de A pour la détermination du facteur A, et

f) détermination du potentiel de gaz d'après l'équation :

$$potentiel\ de\ gaz = \frac{A \times \sqrt{T}[(\Phi \times h_2) + (\frac{i \times (\sqrt{(K_0^2 + K^2)} - K_0) \times 3,1 \times 10^2 \times t}{\mu})]}{\cap \times \pi \times q_{10° c}} \quad (4)$$

$\mu$ étant connu en fonction de T et $q_{10°C}$.

2.    Procédé selon la revendication 1, caractérisé en ce que, pour l'identification de la couche responsable du potentiel de gaz naturel mis en évidence selon la revendication 1 ou de la roche-mère selon l'état de maturation et le faciès organique dans le but de l'évaluation de sa proportion gas/huile et ainsi du potentiel d'huile à partir des mêmes mesures de gaz-trace,

a) on combine les relations (figures 5 et 6) établies sur la base de paramètres géochimiques déjà mesurés entre la maturité et le faciès organique d'une roche-mère d'une part, avec les $\delta 13C1o$ et $\delta DC1o$ d'origine de méthanes de couches d'autre part dans un graphique (figure 4) dans lequel $\delta 13C1$ et $\delta DC1$ sont rapportés aux axes,

b) on rapporte sur la même figure 4 sous forme de famille de droites parallèles la relation entre les différences de proportions d'isotopes F13C1 et FDC1 qui se calcule pour divers facteurs A à partir de la revendication 1 dans l'équation (3) par introduction des facteurs de fractionnement déterminés $\delta 13C1/12C1 = 1,0014493$ et $\alpha DC1/HC1 = 0,9752528$, la modification isotopique F13C1/FDC1 de paires d'isotopes d'origine $\delta 13C1o/\delta DC1o$ se déplaçant le long de la famille de droites sur une distance qui est déterminée à partir de la revendication 1 selon l'équation (3) à partir du facteur A adjoint et de la concentration en méthane xsn mesurée,

c) on introduit dans le graphique de la figure 4 des paires d'isotopes $\delta 13C1/\delta DC1$ mesurées à la surface et on les déplace en sens inverse le long de la famille de droites d'une distance déterminée par les valeurs connues A et concentration en méthane xsn pour déterminer une combinaison discrète de la paire d'origine $\delta 13C1o/\delta DC1o$, donc de la maturation et du faciès de la roche-mère et ainsi de la proportion relative gaz/huile de son potentiel et

d) on détermine, à partir du potentiel de gaz déterminé dans la revendication 1 selon l'équation (4), la portion du potentiel d'huile selon l'équation

$$\text{potentiel d'huile} = \frac{\text{potentiel de gaz x 100}}{\text{portion de gaz de la source (\%)}} - \text{potentiel de gaz} \quad (5).$$

Abb. 1

$^{x}sn$

10    100    1000    10000 [ppb]

log adsorbiertes Gas -8    -7    -6    -5    -4    -3    -2    -1    0

Fraktionierung bei stationärem Gleichgewicht

$\delta^{13}C_1$

$^{x}sn$ [ppb] 100    1000    10000

Abb. 10

A = 0,01

A = 0,1

A = 0,3

A = 1,0

A = 10

$\delta^{13}C_1$ [‰]

$\Delta\delta^{13}C_1 = F13C1$ [‰]

Abb. 2

EP 0 465 932 B1

Abb. 3

Abb. 4

Abb. 5

Abb. 6

Abb. 7

STETIG ABSINKENDES BECKEN

Sedimentationsrate < vertikaler Wasserfluss

Ausbeute

δ¹³Cᵢ

δDCᵢ

Muttergestein

stationär

Zeit

Tiefe

Abb. 8

BECKEN IN HEBUNG

Sedimentationsrate > vertikaler Wasserfluss

Zeit →

Tiefe ↓

Ausbeute        $\delta^{13}C_1$        $\delta DC_1$

−    +        −    +

Nicht stationär
gleiche Lithologie

stationär

Muttergestein

Abb. 9

EP 0 465 932 B1